# EUROPÄISCHE PATENTSCHRIFT

(11) **EP 1 234 004 B1**
(45) Veröffentlichungstag und Bekanntmachung des Hinweises auf die Patenterteilung: **17.05.2006**
(21) Anmeldenummer: 00966164.6
(22) Anmeldetag: 13.10.2000
(51) Int. Cl.: C08L 57/00, C08J 3/12, D04H 1/64, C08L 101/00

(54) **THERMISCH HÄRTBARES POLYMERES BINDEMITTEL IN PULVERFORM**
THERMALLY HARDENABLE POLYMER BINDING AGENT IN THE FORM OF A POWDER
LIANT POLYMERE THERMODURCISSABLE SOUS FORME PULVERULENTE

(30) Priorität: 14.10.1999 DE 19949593
(43) Veröffentlichungstag der Anmeldung: 28.08.2002
(73) Patentinhaber: BASF Aktiengesellschaft, 67056 Ludwigshafen (DE)
(72) Erfinder: DREHER, Stefan, 67433 Neustadt (DE); RECK, Bernd, 67269 Grünstadt (DE); SEUFERT, Michael, 67098 Bad Dürkheim (DE); TÜRK, Johannes, 67459 Böhl-Iggelheim (DE); LAUBENDER, Matthias, 67105 Schifferstadt (DE); GERST, Matthias, 67433 Neustadt (DE); SACK, Heinrich, 67454 Hassloch (DE)
(74) Vertreter: Kinzebach, Werner
(86) Internationale Anmeldenummer: PCT/EP2000/010107
(87) Internationale Veröffentlichungsnummer: WO 2001/027198

(56) Entgegenhaltungen:
- EP-A- 0 725 093
- DOCUMENTATION ABSTRACTS JOURNAL A. PLASTICS, POLYMERS., Bd. 1980, Nr. 40, XP002158222 DERWENT PUBLICATIONS, LONDON., GB & JP 55 108407 A (NIPPON SHOKUBAI KK) 20. August 1980 (1980-08-20)

## Beschreibung

Die vorliegende Erfindung betrifft thermisch härtbare Polymerdispersionspulver und deren Verwendung als Bindemittel für Formkörper.

Die Verfestigung von flächenförmigen Fasergebilden, beispielsweise Faservliesen, Formkörpern wie Faserplatten oder Spanplatten etc., erfolgt häufig auf chemischem Weg unter Verwendung eines polymeren Bindemittels. So werden Formteile mit hoher mechanischer Festigkeit, insbesondere hoher Nass- und Wärmestandfestigkeit erhalten. Neben flüssigen polymeren Bindemitteln wie Polymer-Lösungen oder -Dispersionen werden auch Polymerpulver eingesetzt. Diese führen gegenüber den flüssigen Bindern zu einem geringeren Energiebedarf bei der thermische Härtung, da kein Verdampfen des Dispergiermediums erfolgen muss.

Thermisch härtbare Polymerpulver und deren Verwendung als Bindemittel sind bereits bekannt. In DE 22 14 450 werden pulverförmige Copolymerisate bestehend aus Ethylen und Maleinsäureanhydrid genannt, die als Vernetzer Verbindungen mit 1 bis 4 Hydroxygruppen sowie mindestens eine Amin- bzw. Amidgruppe enthalten. Die thermische Vernetzung derartiger Zusammensetzung erfolgt bei 110 bis 300 °C.

In der WO 90/14457 wird die Verwendung von thermoplastischen Polymerpulvern, z. B. Polypropylen, Polyester oder Polyamid, als Bindemittel für Glasfasern beschrieben. AU 36659/89 empfiehlt für diese Anwendung Polymerpulver auf Basis von Polyester oder Polystyrol. Nachteilig ist die geringe Festigkeit der so gebundenen Fasergebilde bei Kontakt mit Wasser oder Lösungsmitteln.

Die Verfestigung von pulverförmigen, vernetzbaren Polymerisaten auf der Basis von Phenol-Formaldehyd-Harzen ist in der US 4 612 224 beschrieben. Nachteilig bei diesem Bindersystem ist die hohe Formaldehydemission bei der Herstellung und Verwendung der so verfestigten Fasermaterialien.

Wärmehärtbare Copolymerisate auf der Basis von Acrylsäureestern und/oder Vinylestern, welche noch (Meth)acrylsäureester von mono- und polyfunktionellen Hydroxycarbonsäuren und N-Alkoxyalkyl(meth)acrylamid als Vernetzerkomponenten enthalten, sind in der DE 27 01 490 als pulverförmige Anstrichmittel beschrieben. DE 43 06 808 nennt Vinylacetat- oder (Meth)acrylat-Copolymere mit einer Glastemperatur von -20 bis +60 °C als pulverförmige Faserbindemittel. Die Copolymerisate enthalten 0,1 bis 10 Gew.-% N-Methylol(meth)acrylamid als vernetzungsfähige Einheiten, die Vernetzung erfolgt bei Temperaturen von 100 bis 200 °C. Durch die Anwesenheit der hydroxymethylierten Monomereinheiten wird bei der thermischen Vernetzung Formaldehyd abgespalten.

In der EP 601 518 werden vernetzbare, in Wasser dispergierbare Dispersionspulver auf der Basis von carboxylgruppenhaltigen Acrylatcopolymerisaten beschrieben, die in Gegenwart von Polyvinylalkohol getrocknet werden und zur Vernetzung polyvalente Metallionen enthalten können. Ähnliche vernetzbare Dispersionspulver sind auch aus der US 3 409 578 bekannt, in der Polymerzusammensetzungen aus carboxylgruppenhaltigen Polymeren und/oder carboxylgruppenhaltigen Schutzkolloiden in Gegenwart von polyvalenten Metallionen vernetzt werden. Nachteilig an diesen Systemen ist, dass derartige Zusammensetzungen häufig in Gegenwart von Wasser Säure freisetzen und zur vorzeitigen Vernetzung, speziell bei Kontakt mit Feuchtigkeit neigen. Außerdem ist die Nassfestigkeit Feuchtklimaformbeständigkeit der erhaltenen Formteile häufig unbefriedigend.

Au der EP 723 975 sind vernetzbare Dispersionspulver auf der Basis von epoxidgruppenhaltigen Copolymerisaten bekannt. Zur Vernetzung werden externe Vernetzer, beispielsweise Polyamine, Polycarbonsäuren, hydroxyfunktionalisierte Polymere sowie polyvalenten Metallsalze zugegeben. Problematisch beim Einsatz von Polyaminen oder polyvalenten Metallsalzen ist die geringe Lagerstabilität. Der Einsatz von Polycarbonsäuren oder hydroxyfunktionalisierten Polymeren beeinträchtigt die Lagerstabilität nicht; allerdings muss zur Reaktion mit den Epoxygruppen bei erhöhter Temperatur gearbeitet werden, da ansonsten die in der Anmeldung angegebene Stabilisierung der Dispersionspulver mit üblichen Schutzkolloiden nicht möglich wäre.

Aus der EP 721 004 sind vernetzbare, redispergierbare Pulvermischungen bekannt, welche filmbildende Polymerteilchen mit mindestens einer funktionellen, vernetzbaren Gruppe enthalten. Die vernetzbare Gruppe kann auch über die Schutzkolloide eingeführt werden. Zur Vernetzung wird auch in dieser Schrift die Zugabe eines externen Vernetzers empfohlen, der mindestens eine reaktive Komponente umfaßt, welche mit den funktionellen Gruppen nicht-ionische Bindungen eingeht, nachdem die Mischung in Wasser redispergiert wird.

Die EP 894 821 nennt Polymerpulver bestehend aus 30 bis 95 Gew.-% eines wasserunlöslichen Polymerisats 1, 5 bis 70 Gew.-% eines wasserlöslichen Polymerisats 2 und 0,01 bis 5 Gew.-% eines Phasentransferkatalysators, wobei die Polymerisate 1 und/oder 2 reaktive Gruppen enthalten, die miteinander oder mit einem Vernetzer reagieren. Als reaktive Gruppen werden genannt: Alkoxysilan-, Epoxy-, Isocyanat-, Hydroxy-, Carboxy-, Thiol-, Amino- oder Aldehyd-Gruppen. Als Vernetzer kommen dabei z. B. Polyamine, Polycarbonsäuren und Polyalkohole in Betracht. Geeignete Phasentransferkatalysatoren sind beispielsweise quartäre Amine, Phosphoniumsalze und Kronenether. Die Zusammensetzungen besitzen eine hohe Lagerstabilität und führen nach thermischer Härtung zu Formteilen mit hoher Festigkeit. Aufgrund des enthaltenen Phasentransferkatalysators ist die Wasseraufnahme der Formteile unbefriedigend hoch und die Feuchtklimabeständigkeit dementsprechend gering.

In der EP 894 822 werden Polymerpulver beschrieben, die zusammengesetzt sind aus 30 bis 95 Gew.-% eines wasserunlöslichen Polymerisats 1 mit 0,5 bis 10 Gew.-%-reaktiven Monomers, 5 bis 70 Gew.-% eines wasserlöslichen Polymerisats 2 und ein in Salzform vorliegender Vernetzer. Als reaktive Monomere sind bevorzugt Carbonyl-, Epoxy-, Anhydrid-, Isocyanat- und aziridingruppenhaltige Verbindungen. Als Vernetzer kommen Hydrazide, Hydrazine, Hydrazone, Amine und Hydroxylaminester zum Einsatz, beispielsweise Hexamethylendiamin-Phosphat oder Adipinsäuredihydrazid-Acetat. Durch die Blockierung der Vernetzer in Salzform ist eine hohe Lagerstabilität der Zusammensetzungen gewährleistet, erst bei Zugabe einer starken Base oder erhöhten Temperaturen tritt eine Vernetzung ein. Die Wasserfestigkeit und Feuchtklimabeständigkeit der so erhaltenen Faserteile ist jedoch gering.

Die DE-A-197 92 161 beschreibt thermisch härtbare, wässrige Zusammensetzung, enthaltend mindestens ein Polymerisat (A1), das 0 bis 5 Gew.-% einer α,β-ethylenisch ungesättigten Mono- oder Dicarbonsäure einpolymerisiert enthält und das erhältlich ist durch radikalische Polymerisation in Gegenwart von
a) wenigstens einem durch radikalische Polymerisation erhältlichen Polymerisat (A2), das 15 bis 100 Gew.-% einer α,β-ethylenisch ungesättigten Mono- oder Dicarbonsäure einpolymerisiert enthält, und
b) wenigstens einem Amin, das mindestens eine lange Kette mit wenigstens sechs Kohlenstoffatomen umfasst,
wobei das Gewichtsverhältnis (auf Feststoffbasis) von Polymerisat (A1) zu Polymerisat (A2) im Bereich von 7:1 bis 1:7 und das Gewichtsverhältnis von Polymerisat (A2) zu Amin mit langer Kette im Bereich von 20:1 zu 2:1 liegt. Pulver auf Basis dieser Zusammensetzung sind nicht beschrieben.

Der vorliegenden Erfindung liegt die Aufgabe zugrunde, pulverförmige formaldehydfreie Bindemittel für gebundene Substrate, wie z. B. Formkörper, bereitzustellen. Diese Bindemittel sollen insbesondere für faserige und körnige Substrate geeignet sein. Vorzugsweise sollen sie dem Substrat eine hohe mechanische Festigkeit und Formbeständigkeit auch im Feuchtklima verleihen. Außerdem soll das pulverförmige Bindemittel eine hohe Lagerstabilität aufweisen.

Diese Aufgabe wird überraschenderweise gelöst durch ein thermisch härtbares polymeres Bindemittel in Pulverform, enthaltend
- 87,5 bis 12,5 Gew.-%, bezogen auf das Gesamtgewicht des polymeren Bindemittels, wenigstens eines wasserunlöslichen Polymerisats A1,
- 12,5 bis 87,5 Gew.-%, bezogen auf das Gesamtgewicht des polymeren Bindemittels, wenigstens eines wasserlöslichen Polymerisats A2, das aufgebaut ist aus
   - 50 bis 100 Gew.-%, bezogen auf das Polymer A2, mindestens einer ethylenisch ungesättigten Mono- und/oder Dicarbonsäure,
   - 0 bis 50 Gew.-%, bezogen auf das das Polymer A2, einer ethylenisch ungesättigten Verbindung E, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
   - bis zu 20 Gew.-%, bezogen auf das das Polymer A2, eines oder mehrerer weiterer Monomere,
   und
- 0 bis 30 Gew.-%, bezogen auf das Gesamtgewicht des polymeren Bindemittels, wenigstens eines eine Hydroxylgruppe enthaltenden Amins,
wobei das polymere Bindemittel 0,1 bis 30 Gew.-% des wenigstens eine Hydroxylgruppe enthaltenden Amins in Form der Verbindung E und/oder als separate Komponente enthält.

Im Zusammenhang mit den Monomerkomponenten des Polymerisats A1 steht Alkyl vorzugsweise für geradkettige oder verzweigte C₁-C₂₂₋Alkylreste, insbesondere C₁-C₁₂- und besonders bevorzugt C₁-C₆-Alkylreste, wie Methyl, Ethyl, n-Propyl, n-Butyl, sek.-Butyl, tert.-Butyl, n-Pentyl, n-Hexyl, 2-Ethylhexyl, n-Dodecyl oder n-Stearyl.
Hydroxyalkyl steht vorzugsweise für Hydroxy-C₁-C₆-alkyl, wobei die Alkylreste geradkettig oder verzweigt sein können, und insbesondere für 2-Hydroxyethyl, 2- oder 3-Hydroxypropyl, 2-Methyl-2-hydroxypropyl und 4-Hydroxybutyl.
Cycloalkyl steht vorzugsweise für C₅-C₇-Cyclohexyl, insbesondere Cyclopentyl und Cyclohexyl.
Aryl steht vorzugsweise für Phenyl oder Naphthyl.

Bei dem Polymerisat A1 handelt es sich in der Regel um ein radikalisches Emulsionspolymerisat. Zu dessen Herstellung können alle durch radikalische Polymerisation polymerisierbaren Monomere eingesetzt werden. Im Allgemeinen ist das Polymerisat aufgebaut aus
- 80 bis 100 Gew.-%, bevorzugt 85 bis 99,9 Gew.-%, bezogen auf das Gesamtgewicht der Monomere für das Polymerisat A1, wenigstens eines ethylenisch ungesättigten Hauptmonomeren sowie
- 0 bis 20 Gew.-%, bevorzugt 0,1 bis 15 Gew.-%, bezogen auf das Gesamtgewicht der Monomere für das Polymerisat A1, wenigstens eines ethylenisch ungesättigten Comonomeren.

Bei dem Hauptmonomer handelt es sich in der Regel um ein monoethylenisch ungesättigtes Monomer oder um konjugierte Diolefine mit begrenzter Wasserlöslichkeit, die in der Regel weniger als 80 g/l, vorzugsweise weniger als 50 g/l, z.B im Bereich von 0,1 bis 50 g/l (bezogen auf 25°C und 1 bar) beträgt.

Das Hauptmonomer ist vorzugsweise ausgewählt unter
- Estern aus vorzugsweise 3 bis 6 C-Atomen aufweisenden α,β-monoethylenisch ungesättigten Mono- oder Dicarbonsäure, wie Acrylsäure, Methacrylsäure, Maleinsäure, Fumarsäure und Itaconsäure mit C₁-C₁₂-, vorzugsweise C₁-C₈-Alkanolen. Beispiele für derartige Ester sind insbesondere Methyl-, Ethyl-, n-Butyl-, Isobutyl-, tert-Butyl-, n-Pentyl-, iso-Pentyl- und 2-Ethylhexylacrylat und/oder -methacrylat;
- vinylaromatischen Verbindungen, bevorzugt Styrol, α-Methylstyrol, o-Chlorstyrol, Vinyltoluolen und Mischungen davon;
- Vinylestern von C₁-C₁₈-Mono- oder Dicarbonsäuren, wie Vinylacetat, Vinylpropionat, Vinyl-n-butyrat, Vinyllaurat und/oder Vinylstearat;
- konjugierten Dienen, Butadien;
- linearen 1-Olefinen, verzweigtkettigen 1-Olefinen oder cyclischen Olefinen, wie z. B. Ethen, Propen, Buten, Isobuten, Penten, Cyclopenten, Hexen oder Cyclohexen. Des Weiteren sind auch Metallocen-katalysiert hergestellte Oligoolefine mit endständiger Doppelbindung, wie z. B. Oligopropen oder Oligohexen geeignet;
- Acrylnitril, Methacrylnitril. Der Anteil an den Hauptmonomeren wird aufgrund der erhöhten Wasserlöslichkeit der Nitrile in der Regel 30 Gew.-%, bezogen auf die Gesamtmonomermenge nicht überschreiten. Sofern erwünscht machen die Nitrile in der Regel 1 bis 30, vorzugsweise 2 bis 25 und insbesondere 5 bis 20 Gew.-% der Gesamtmonomermenge aus.
- Vinyl- und Allylalkylethern mit 1 bis 40 Kohlenstoffatomen im Alkylrest, wobei der Alkylrest noch weitere Substituenten, wie eine oder mehrere Hydroxylgruppen, eine oder mehrere Amino- oder Diaminogruppen oder eine bzw. mehrere Alkoxylatgruppen tragen kann, wie z. B. Methylvinylether, Ethylvinylether, Propylvinylether und 2-Ethylhexylvinylether, Isobutylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Besonders bevorzugte Hauptmonomere sind vinylaromatische Monomere, insbesondere Styrol, sowie Ester der Acrylsäure und Ester der Methacrylsäure mit C₁-C₈-Alkanolen, insbesondere Methylmethacrylat, n-Butylacrylat, Ethylacrylat, 2-Ethylhexylacrylat, weiterhin Vinylacetat, Ethen und Butadien.

Beispiele für geeignete Comonomere sind:
- monoethylenisch ungesättigten C₃-C₈-Mono- oder Dicarbonsäuren oder deren Anhydride, vorzugsweise Acrylsäure, Methacrylsäure, Methacrylsäureanhydrid, Maleinsäure, Maleinsäureanhydrid, Fumarsäure und/oder Itaconsäure;
- Amide und N-Alkylamide der vorgenannten ethylenisch ungesättigten Carbonsäuren, wie Acrylamid, Methacrylamid, N,N-Dimethylacrylamid, N-tert.-Butylacrylamid, N-Methylmethacrylamid, N-Alkylolamide, insbesondere N-Hydroxymethyl- und N-Hydroxyethylamide monoethylenisch ungesättigter Monocarbonsäuren wie N-Methylolacrylamid und -methacrylamid.
- sulfogruppenhaltige Monomere, wie z. B. Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalzen bzw. deren Mischungen sowie Sulfopropylacrylat und/oder Sulfopropylmethacrylat;
- C₁-C₄-Hydroxyalkylester von C₃-C₈-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxylierten Derivate oder Ester von mit 2 bis 50 Mol Ethylenoxid, Propylenoxid, Butylenoxid oder Mischungen davon alkoxylierten C₁-C₁₈-Alkoholen mit den erwähnten Säuren, wie Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyglykolacrylat (11 EO), (Meth)acrylsäureester von mit 3, 5, 7, 10 oder 30 Mol Ethylenoxid umgesetztem C₁₃/C₁₅-Oxoalkohol bzw. deren Mischungen;
- ethylenisch ungesättigte Phosphor- und Phosphonsäuren z.B. Vinylphosphonsäure und deren Salze, Vinylphosphonsäuredimethylester, Acryloxyethylphosphat, Acryloxyethylphosphonat, 2-Acrylamido-2-methylphosphonat und vergleichbare
- Alkylaminoalkyl(meth)acrylate oder Alkylaminoalkyl(meth)acrylamide oder deren Quarternisierungsprodukte, wie z. B. 2-(N,N-Dimethylamino)-ethyl(meth)acrylat oder 2-(N,N,N-Trimethylammonium)-ethylmethacrylat-chlorid, 3-(N,N-Dimethylamino)-propyl(meth)acrylat, 2-Dimethylamino-ethyl(meth)acrylamid, 3-Dimethylaminopropyl(meth)acrylamid, 3-Trimethylammoniumpropyl(meth)acrylamid-chlorid und Mischungen davon;
- Allylester von C₁-C₃₀-Monocarbonsäuren;
- N-Vinylverbindungen, wie N-Vinylformamid, N-Vinyl-N-methylformamid, N-Vinylpyrrolidon, N-Vinylimidazol, 1-Vinyl-2-methyl-imidazol, 1-Vinyl-2-methylimidazolin, 2-Vinylpyridin, 4-Vinylpyridin, N-Vinylcarbazol und/oder N-Vinylcaprolactam;
- Diallyldimethylammoniumchlorid, Vinylidenchlorid, vinylchlorid, Acrolein, Methacrolein;
- 1,3-Diketogruppen enthaltende Monomere, wie Acetoacetoxyethyl(meth)acrylat oder Diacetonacrylamid, harnstoffgruppenhaltigen Monomeren, wie Ureidoethyl(meth)acrylat, Acryl-amidoglykolsäure, Methacrylamidoglykolatmethylether;
- Silylgruppen enthaltende Monomere, wie Trimethoxysilylpropylmethacrylat;
- Glycidylgruppen enthaltende Monomere, wie Glycidylmethacrylat.

Bevorzugte Comonomere sind Hydroxyethylacrylat, Hydroxypropylacrylat, Hydroxybutylacrylat, Hydroxyethylmethacrylat und Mischungen davon. Ganz besonders bevorzugt sind Hydroxyethylacrylat und Hydroxyethylmethacrylat, insbesondere in Mengen von 2 bis 20 Gew.-%, bezogen auf das Gesamtmonomere A1.

Bevorzugte Comonomere sind weiterhin die vorgenannten monoethylenisch ungesättigten Carbonsäuren, insbesondere die Monocarbonsäuren, die vorzugsweise in einer Menge bis 10 Gew.-%, z.B. 0,1 bis 10 Gew.-% im Polymer A1 einpolymerisiert sind.

Bevorzugte Comonomere sind weiterhin die Amide monoethylenisch ungesättigter Monocarbonsäuren, z.B. Acrylamid oder Methacrylamid. Diese machen in der Regel, sofern erwünscht, bis zu 10 Gew.-%, z.B. 0,1 bis 10 Gew.-%, insbesondere 0,1 bis 5 Gew.-% der Gesamtmonomermenge aus.

Die Monomerzusammensetzung wird im Allgemeinen so gewählt, dass für das Polymerisat A1 eine Glasübergangstemperatur Tg im Bereich von -60 °C bis +150 °C resultiert. Die Glasübergangstemperatur Tg der Polymerisate kann in bekannter Weise z. B. mittels Differential Scanning Calorimetry (DSC) ermittelt werden. Die Tg kann auch mittels der Fox-Gleichung näherungsweise berechnet werden. Nach Fox T. G., Bull. Am. Physics Soc. 1,3, page 123 (1956) gilt: 1/Tg = x₁/Tg₁ + x₂/Tg₂ + ... + xₙ/Tgₙ, wobei xₙ für den Massebruch (Gew.-%/100) des Monomers n steht, und Tgₙ die Glasübergangstemperatur in Kelvin des Homopolymers des Monomeren n ist. Tg-Werte für Homopolymerisate sind in Polymer Handbook 3nd Edition, J. Wiley & Sons, New York (1989) aufgeführt. Für die Weiterverarbeitung zu Faserdämmplatten werden bevorzugt Polymerisate A1 mit einer Glasübergangstemperatur im Bereich von 60 bis 120 °C eingesetzt. Für die weiterverarbeitung zu Korkprodukten liegt die Glasübergangstemperatur vorzugsweise in einem Bereich von -50 bis 90 °C.

Die erfindungsgemäßen pulverförmigen polymeren Bindemittel enthalten erfindungsgemäß wenigstens ein Amin, das wenigstens eine Hydroxylgruppe aufweist, und zwar in Form der im Polymerisat A2 einpolymerisierten Verbindung E und/oder als separate Komponente.

Bei der gegebenenfalls als Komponente der Polymerisate A2 eingesetzten ethylenisch ungesättigten Verbindung E handelt es sich vorzugsweise um Ester der zuvor genannten C₃-C₁₀-Monocarbonsäuren, insbesondere der Acrylsäure, der Methacrylsäure oder der Crotonsäure, und um die Halbester und/oder die Diester der zuvor genannten C₄-C₈-Dicarbonsäuren, insbesondere der Fumarsäure, der Maleinsäure, der 2-Methylmaleinsäure und der Itaconsäure, mit dem wenigstens eine Hydroxylgruppe aufweisenden Amin.

Erfindungsgemäß enthält das pulverförmige polymere Bindemittel das wenigstens eine Hydroxylgruppe enthaltende Amin in einer Menge von 0,1 bis 30 Gew.-%, insbesondere 0,5 bis 20 Gew.-%, bezogen auf das Gesamtgewicht des pulverförmigen Bindemittels, wobei das Amin in Form der im Polymerisat A2 einpolymerisierten Monomere E und/oder als separater Bestandteil vorliegen kann.

Bei dem in der Verbindung E einkondensierten und/oder separat eingesetzten Hydroxylgruppen aufweisenden Amin handelt es sich in einer bevorzugten Ausführungsform der Erfindung um ein sekundäres oder tertiäres Amin, das einen, oder im Falle der tertiären Amine einen oder zwei langkettige Kohlenwasserstoff-Reste mit wenigstens 6 und vorzugsweise bis 30, insbesondere bis 22 C-Atomen und wenigstens einen hydroxylgruppenhaltigen Rest aufweist. Bei den langkettigen Kohlenwasserstoffresten handelt es sich beispielsweise um C₆- bis C₂₂-Alkyl, C₆- bis C₂₂-Alkenyl, C₆- bis C₂₂-Alkylaryl und C₆- bis C₂₂-Alkenylaryl, wobei C₆- bis C₂₂-Alkenyl ein, zwei oder drei nicht benachbarte Doppelbindungen aufweist. Letzterer ist vorzugsweise ausgewählt ist unter C₁-C₆-Hydroxyalkyl, insbesondere C₂-C₄-Hydroxyalkyl, und Poly-C₁-C₆-alkylenoxidresten mit terminalen Hydroxygruppen. Die Polyalkylenoxidreste weisen dabei in der Regel 2 bis 100, bevorzugt 2 bis 50 Alkylenoxid-Einheiten auf, die gleich oder verschieden sind und sich in der Regel von Ethylenoxid, 1,2-Propylenoxid und/oder 1,2-Butylenoxid, insbesondere von Ethylenoxid ableiten. Im Falle unterschiedlicher Alkylenoxid-Einheiten in den Polyalkylenoxid-Resten können diese in Blöcken mit einheitlichem Aufbau oder statistisch verteilt vorliegen.

Bevorzugt ist das wenigstens eine Hydroxylgruppe enthaltende Amin, welches einen langkettigen Kohlenwasserstoffrest aufweist, ausgewählt unter Aminen der allgemeinen Formel I

R^{c}NR^{a}R^{b} (I)

wobei
- R^{c}: für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder 3 nicht benachbarte Doppelbindungen aufweisen kann,
- R^{a}: für Hydroxy-C₁-C₆-alkyl oder einen Rest der Formel II

-(CH₂CH₂O)ₓ(CH₂CH(CH₃)O)_{y}-H (II)

steht, wobei
in der Formel II die Reihenfolge der Alkylenoxideinheiten beliebig ist und x und y unabhängig voneinander für eine ganze Zahl von 0 bis 100, bevorzugt 0 bis 50, stehen, wobei die Summe aus x und y > 1 ist,
- R^{b}: für Wasserstoff, C₁- bis C₂₂-Alkyl, Hydroxy-C₁-C₆-alkyl, C₆- bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann, oder R^{b} für einen Rest der Formel III

-(CH₂CH₂O)ᵥ(CH₂CH(CH₃)O)_{w}-H (III)

steht, wobei
in der Formel III die Reihenfolge der Alkylenoxideinheiten beliebig ist und v und w unabhängig voneinander für eine ganze Zahl von 0 bis 100, vorzugsweise 0 bis 50, stehen,
und Mischungen davon. Diese Amine wirken als oberflächenaktive Verbindungen.

Bevorzugt steht R^{c} für C₈- bis C₂₀-Alkyl oder C₈- bis C₂₀-Alkenyl, wobei der Alkenylrest 1,2 oder 3 nicht benachbarte Doppelbindungen aufweisen kann. Vorzugsweise steht R^{c} für den Kohlenwasserstoffrest einer gesättigten oder ein- oder mehrfach ungesättigten Fettsäure. Bevorzugte Reste R^{c} sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Bevorzugt handelt es sich bei dieser Aminkomponente um ein alkoxylierte Fettamin oder ein alkoxiliertes Fettamingemisch, worunter Ethoxilate besonders bevorzugt sind. Insbesondere werden Alkoxilate von Aminen auf Basis natürlich vorkommender Fettsäuren eingesetzt, wie z. B. Talgfettamine, die überwiegend gesättigte und ungesättigte C₁₄-, C₁₆- und C₁₈-Alkylamine enthalten oder Kokos-amine, die gesättigte, einfach und zweifach ungesättigte C₆-C₂₂-, vorzugsweise C₁₂-C₁₄-Alkylamine enthalten. Zur Alkoxilierung geeignete Amingemische sind z. B. verschiedene Armeen®-Marken der Fa. Akzo oder Noram®-Marken der Fa. Ceca.

Geeignete, kommerziell erhältliche alkoxilierte Amine mit langkettigen Kohlenwasserstoffresten sind z. B. die Noramox®-Marken der Fa. Ceca, bevorzugt ethoxilierte Oleyl-amine, wie Noramox® 05 (5 EO-Einheiten), sowie Produkte, die unter den Marken Lutensol®FA der Fa. BASF AG vertrieben werden.

Das Polymerisat A2 enthält 50 bis 100 Gew.-%, bevorzugt 60 bis 100 Gew.-%, besonders bevorzugt 70 bis 100 Gew.-%, mindestens einer ethylenisch ungesättigten Mono- oder Dicarbonsäure eingebaut. Diese Säuren können in dem Polymerisat gewünschtenfalls auch teilweise oder vollständig in Form eines Salzes vorliegen. Bevorzugt ist die saure Form. Zur Herstellung der Polymerisate A2 kann man selbstverständlich auch die Anhydride der ethylenisch ungesättigten Mono- oder Dicarbonsäuren, oder Mischungen der Anhydride mit den Säuren einsetzen.

Vorzugsweise beträgt die Löslichkeit des Polymerisats A2 in Wasser wenigstens 10 g/l (bei 25 °C), insbesondere wenigstens 50 g/1. Das gewichtsmittlere Molekulargewicht der Polymerisate A2 liegt vorzugsweise im Bereich von 500 bis 500.000 und insbesondere im Bereich von 1000 bis 200.000. Die K-Werte der Polymerisate A2 liegen in der Regel im Bereich von 8 bis 150, vorzugsweise im Bereich von 10 bis 100 (gemessen als 2 gew.-%ige Lösung des Polymeren A2 in Wasser).

Brauchbare ethylenisch ungesättigte Carbonsäuren wurden bereits vorstehend im Zusammenhang mit dem Polymerisat A1 genannt. Bevorzugte Carbonsäuren sind C₃- bis C₁₀-Monocarbonsäuren und C₄- bis C₈-Dicarbonsäuren, insbesondere Acrylsäure, Methacrylsäure, Crotonsäure, Fumarsäure, Maleinsäure, 2-Methylmaleinsäure und/oder Itaconsäure. Besonders bevorzugt sind Acrylsäure, Methacrylsäure, Maleinsäure und Mischungen davon. Als Carbonsäureanhydridkomponente kommen Anhydride der vorgenannten Carbonsäuren in Betracht. Besonders bevorzugt sind Maleinsäureanhydrid und/oder Itaconsäureanhydrid.

Nach einer bevorzugten Ausführungsform enthält das Polymerisat A2 ferner 0,5 bis 50 Gew.-%, bevorzugt 1 bis 30 Gew.-%, bezogen auf das Gesamtgewicht des Polymerisats A2, Strukturelemente, die sich von wenigstens einer ethylenisch ungesättigten Verbindung E ableiten, wobei die Aminkomponente dieser Verbindung vorzugsweise alkoxyliert ist und über mindestens eine terminale Hydroxylgruppe verfügt.

Besonders bevorzugte Aminkomponenten der Verbindung E sind die zuvor beschriebenen Amine der allgemeinen Formel R^{c}NR^{a}R^{b}, wobei R^{a}, R^{b} und R^{c} die angegebenen, insbesondere die als bevorzugt genannten Bedeutungen besitzen.

Die Herstellung der zuvor beschriebenen Ester, Halbester und Diester (ethylenisch ungesättigte Verbindungen E) erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und (C₁- bis C₄)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200 °C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil an Esterbildung kann mittels Infrarotspektroskopie ermittelt werden.

Nach einer bevorzugten Ausführungsform erfolgt die Herstellung der ungesättigten Ester, Halbester oder Diester E und deren weitere Umsetzung zu den erfindungsgemäß eingesetzten Polymerisaten A2 ohne Zwischenisolierung der Ester und vorzugsweise nacheinander im selben Reaktionsgefäß.

Bevorzugt wird zur Herstellung der Polymerisate A2 als Verbindung E ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Neben mindestens einer ethylenisch ungesättigten Mono- und/oder Dicarbonsäure und gegebenenfalls wenigstens einer Verbindung E kann das Polymerisat A2 noch 0 bis 20 Gew.-%, bevorzugt 0,1 bis 10 Gew.-%, andere Monomere einpolymerisiert enthalten. Brauchbare Monomere sind die im Zusammenhang mit dem Polymerisat A1 genannten Monomere, wobei Vinylaromaten, wie Styrol, Olefine, beispielsweise Ethylen, oder (Meth)acrylsäureester wie Methyl(meth)acrylat, Ethyl(meth)acrylat, n-Butyl(meth)acrylat, 2-Ethylhexyl(meth)acrylat und Mischungen davon besonders bevorzugt sind.

Die Herstellung der Polymerisate A2 erfolgt vorzugsweise durch radikalische Polymerisation in Substanz oder in Lösung. Geeignete Lösungsmittel für die Lösungsmittelpolymerisation sind z. B. Wasser, mit Wasser mischbare organische Lösungsmittel, wie Alkohole und Ketone, beispielsweise Methanol, Ethanol, n-Propanol, Isopropanol, n-Butanol, Aceton, Methylethylketon etc., und Mischungen davon. Geeignete Polymerisationsinitiatoren sind beispielsweise Peroxide, Hydroperoxide, Peroxodisulfate, Percarbonate, Peroxoester, Wasserstoffperoxid und Azoverbindungen, wie sie im Folgenden für die Herstellung der erfindungsgemäßen Polymerdispersionen näher beschrieben werden. Die Polymerisate A2 können gewünschtenfalls separat hergestellt und nach üblichem Verfahren isoliert und/oder gereinigt werden. Bevorzugt werden die Polymerisate A2 unmittelbar vor der Herstellung der erfindungsgemäßen Bindemittel hergestellt und ohne Zwischenisolierung eingesetzt.

Die Herstellung der Polymerisate A2, die eine Verbindung E eingebaut enthalten, kann vorteilhaft auch durch polymeranaloge Umsetzung erfolgen. Dazu kann ein Polymerisat, das 80 bis 100 Gew.-% mindestens einer ethylenisch ungesättigten Mono- und/oder Dicarbonsäure eingebaut enthält, mit mindestens einem hydroxylgruppenhaltigen Amin umgesetzt werden.

Geeignete ethylenisch ungesättigte Mono- und Dicarbonsäuren zur Herstellung von Polymerisaten für die polymeranaloge Umsetzung sind die zuvor als Komponente der Verbindung E genannten C₃-C₁₀-Monocarbonsäuren und C₄-C₈-Dicarbonsäuren sowie deren Anhydride. Geeignete Amine, die wenigstens eine Hydroxylgruppe aufweisen, sind ebenfalls die zuvor genannten. Die Säuren können in dem zur polymeranalogen Umsetzung eingesetzten Polymerisat gewünschtenfalls teilweise oder vollständig in Form eines Derivates, bevorzugt eines C₁- bis C₆-Alkylesters, vorliegen.

Die Herstellung der Polymerisate A2 durch polymeranaloge Umsetzung erfolgt vorzugsweise in einem geeigneten nichtwässrigen Lösungsmittel oder in Substanz. Bei der Umsetzung in Substanz kann die Aminkomponente gegebenenfalls im Überschuss eingesetzt werden, um als Lösungsmittel zu dienen. Bevorzugt sind Lösungsmittel, die mit Wasser ein Azeotrop bilden und somit eine einfache Entfernung des bei der Reaktion gebildeten Wassers ermöglichen. Vorzugsweise erfolgt die Umsetzung in Gegenwart eines Veresterungskatalysators, wie zuvor beschrieben. Die Reaktionstemperatur liegt bevorzugt in einem Bereich von 100 bis 200 °C. Bei der Reaktion gebildetes Wasser kann durch geeignete Maßnahmen, wie z. B. Abdestillieren, entfernt werden. Polymere A2, die wenigstens eine Verbindung E eingebaut enthalten, liegen vorzugsweise als Kammpolymer mit kovalent gebundenen Aminseitenketten vor.

Das Gewichtsverhältnis von Polymerisat A1 zu Polymerisat A2, auf Feststoffbasis, liegt in der Regel im Bereich von 7:1 bis 1:7, insbesondere 3:1 bis 1:3.

Das Gewichtsverhältnis von hydroxylgruppen-haltigem Amin zu Polymerisat A2 liegt vorzugsweise im Bereich von 1:100 bis 2:1, insbesondere im Bereich von 1:10 bis 1:1.

In einer anderen bevorzugten Ausführungsform der Erfindung enthält das pulverförmige Bindemittel als hydroxylgruppenhaltiges Amin ein Amin mit wenigstens zwei Hydroxylgruppen, das von den vorgenannten Aminen mit wenigstens einem langkettigen Kohlenwasserstoffrest verschieden ist. Diese Amine wirken als vernetzende Komponente. Hierzu zählen insbesondere Amine der allgemeinen Formel IV, 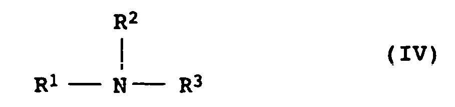 wobei R¹ für ein H-Atom, eine C₁-C₅-Alkylgruppe, eine C₂-C₁₀-Hydroxyalkylgruppe oder einen Rest der Formel V

-(CH₂CH₂O)ₓ(CH₂CH(CH₃)O)_{y}-H (V)

steht, wobei
in der Formel V die Reihenfolge der Alkylenoxideinheiten beliebig ist und x und y unabhängig voneinander für eine ganze Zahl von 0 bis 100 stehen, wobei die Summe aus x und y > 1 ist und R² und R³ unabhängig voneinander für eine C₂-C₁₀-Hydroxyalkylgruppe stehen.

Besonders bevorzugt stehen R² und R³ unabhängig voneinander für eine C₂-C₄-Hydroxyalkylgruppe, insbesondere eine 2-Hydroxyethyl-, eine 2- oder 3-Hydroxypropyl- oder eine 2-, 3- oder 4-Hydroxybutylgruppe, und R¹ für ein H-Atom, eine C₁-C₄-Alkylgruppe, insbesondere für Methyl, Ethyl n- und iso-Propyl, oder eine C₂-C₄-Hydroxyalkylgruppe.

Besonders bevorzugt sind Diethanolamin, Triethanolamin, Diisopropanolamin, Triisopropanolamin, Methyldiethanolamin, Butyldiethanolamin und Methyldiisopropanolamin, insbesondere Triethanolamin, und die Alkoxylate davon.

Weitere bevorzugte Hydroxyalkylamine sind die in der DE 196 21 573 als Komponente A offenbarten Amine, auf die hiermit Bezug genommen wird. Bei diesen Verbindungen handelt es sich um lineare oder verzweigte aliphatische Verbindungen, die pro Molekül mindestens zwei funktionelle Aminogruppen vom Typ (a) und/oder (b) aufweisen 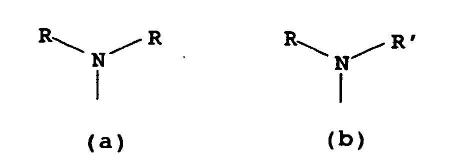 worin R für C₂-C₄-Hydroxyalkyl steht und R' für C₁-C₅-Alkyl steht. Bevorzugt handelt es sich um eine Verbindung der Formel VI 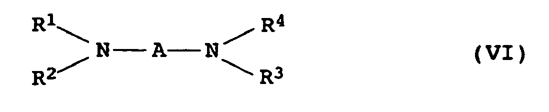 worin
- A: für C₂-C₁₈-Alkylen steht, das gegebenenfalls substituiert ist durch ein oder mehrere Gruppen, die unabhängig voneinander ausgewählt sind unter C₁-C₄-Alkyl, C₂-C₄-Hydroxyalkyl, C₃-C₇-cycloalkyl, OH und NR⁶R⁷, wobei R⁶ und R⁷ unabhängig voneinander für H, C₂-C₄-Hydroxyalkyl oder C₁-C₄-Alkyl stehen, und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert sein kann, wobei R⁶ und R⁷ die oben angegebenen Bedeutungen besitzen, steht;
oder A für einen Rest der Formel steht: 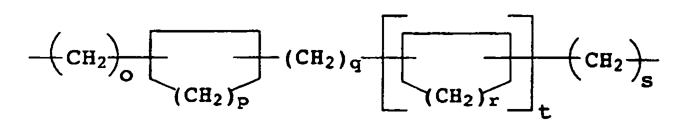 worin
- o, q und s: unabhängig voneinander für 0 oder eine ganze Zahl von 1 bis 6 stehen,
- p und r: unabhängig voneinander für 1 oder 2 stehen und
- t: für 0,1 oder 2 steht,
wobei die cycloaliphatischen Reste auch durch 1, 2 oder 3 C₁-C₄-Alkylreste substituiert sein können und

R¹, R² und R³ und R⁴ unabhängig voneinander für H, C₂-C₄-Hydroxyalkyl, C₁-C₄-Alkyl oder C₃-C₇-Cycloalkyl stehen.

Unter den Verbindungen der Formel VI besonders bevorzugt sind:

### (1) Verbindungen der Formel VIa

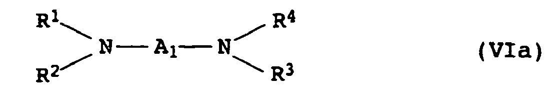

worin
- A₁: für C₂-C₁₂-Alkylen steht, das gegebenenfalls durch mindestens eine C₁-C₄-Alkylgruppe und/oder mindestens eine NR⁶R⁷-Gruppe substituiert ist, wobei R⁶ und R⁷ unabhängig voneinander für C₁-C₄-Alkyl oder C₂-C₄-Hydroxyalkyl stehen und
- R¹, R², R³ und R⁴: unabhängig voneinander für C₂-C₄-Hydroxyalkyl oder H stehen oder einer der Reste R¹ und R² und/oder einer der Reste R³ und R⁴ für C₁-C₄-Alkyl oder C₃-C₇-Cycloalkyl steht.

Besonders brauchbare Verbindungen dieses Typs sind die Verbindungen der folgenden Formeln: 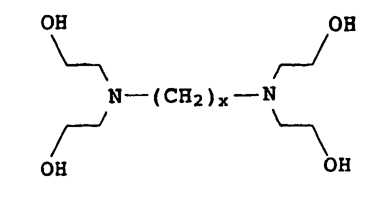 worin x für 2 bis 12, insbesondere 2, 3, 6, 8, 10 oder 12 steht,

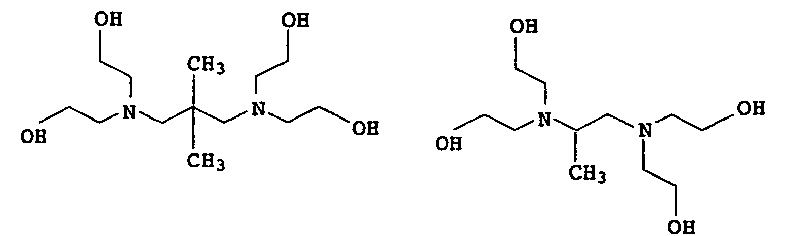

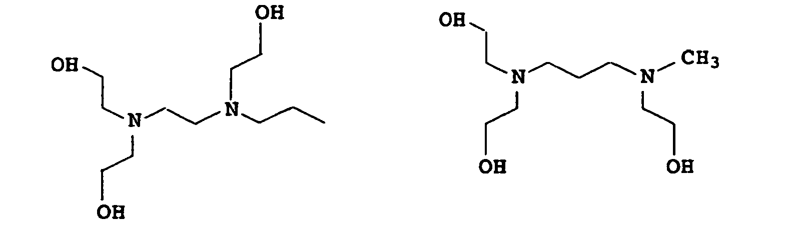

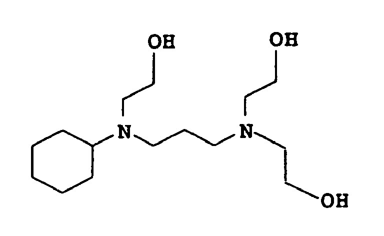

Verbindungen der Formel VIa sind auch die Verbindungen der Formel

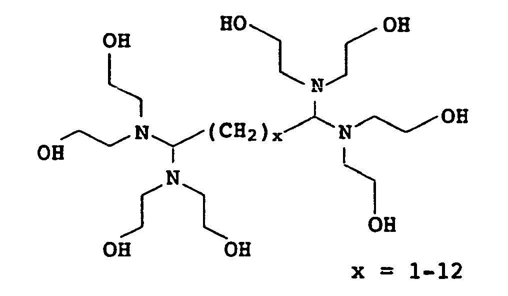

### (2) Verbindungen der Formel VIb

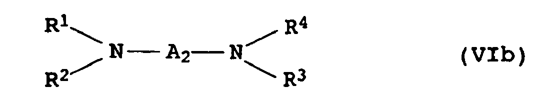

worin
- A₂: für C₂-C₈-Alkylen steht, das durch mindestens eine NR⁵-Gruppe unterbrochen ist, wobei R⁵ (oder die Reste R⁵ unabhängig voneinander) für C₂-C₄-Hydroxyalkyl oder C₁-C₄-Alkyl steht (stehen) und
- R¹, R², R³ und R⁴: unabhängig voneinander für C₂-C₄-Hydroxyalkyl oder H stehen.

Vorzugsweise ist der Rest A₂ durch ein oder zwei Gruppen NR⁵ unterbrochen. Besonders brauchbare Verbindungen dieses Typs sind die Verbindungen der folgenden Formeln:

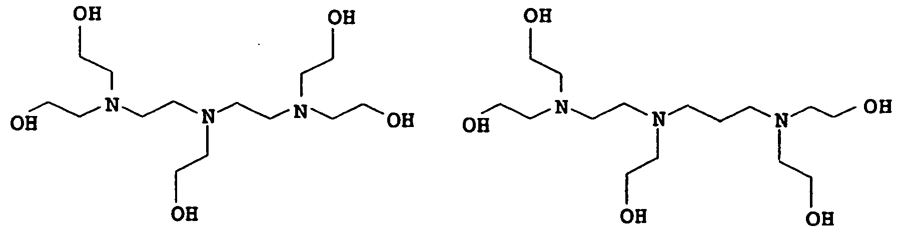

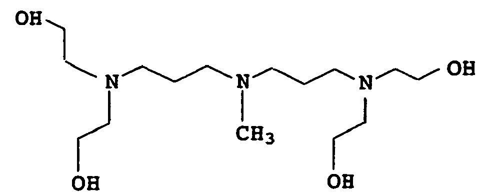

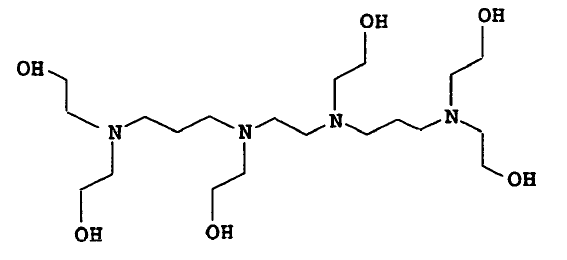

### (3) Verbindungen der Formel VIc

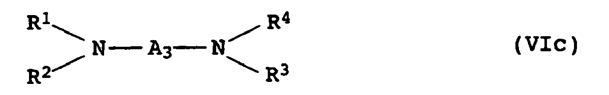

worin
- A₃: für C₂-C₉-Alkylen steht, das durch mindestens eine NR⁵-Gruppe unterbrochen ist, wobei R⁵ für H, C₂-C₄-Hydroxyalkyl oder CH₂CH₂NR⁶R⁷ steht,
- R¹, R², R³ und R⁴: unabhängig voneinander für C₁-C₄-Alkyl stehen, das gegebenenfalls durch mindestens eine NR⁵-Gruppe unterbrochen und/oder durch mindestens eine NR⁶R⁷-Gruppe substituiert ist,
- R⁵: für H, C₂-C₄-Hydroxyalkyl oder -R⁸NR⁶R⁷ steht und
- R⁶ und R⁷: unabhängig voneinander für H, C₂-C₄-Hydroxyalkyl oder -R⁸NR⁶R⁷ stehen,
- R⁸: für einen Ethylen- oder Propylenrest steht,
wobei (durchschnittlich) wenigstens 30%, insbesondere > 60% und bevorzugt > 80% der (hydroxyalkylierbaren) N-Atome eine Hydroxyalkylgruppe tragen.

Vorzugsweise ist die C₂-C₈-Alkylengruppe durch mindestens zwei Gruppen NR⁵ unterbrochen. Besonders brauchbare Verbindungen dieses Typs sind Umsetzungsprodukte von Ethylenoxid mit Polyethyleniminen verschiedener Molekulargewichte mit mehreren Strukturelementen NR⁶R⁷ und NR⁵. Brauchbare Polyethylenimine sind solche, deren gewichtsmittleres Molekulargewicht im Bereich von 400 bis 2 000 000 liegt. Die nachfolgende schematische Formel soll die Verbindung dieses Typs erläutern: 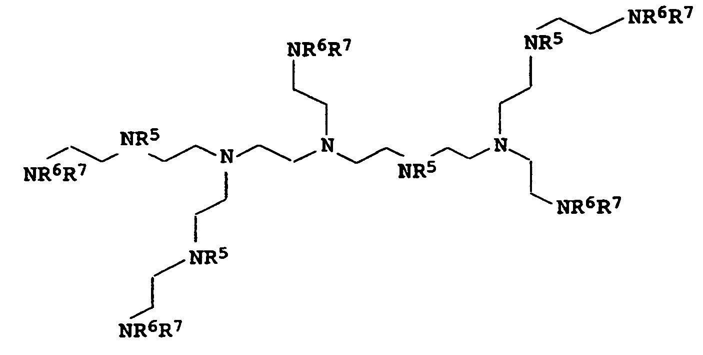 worin
R⁵ für H, C₂-C₄-Hydroxyethyl oder -R⁸NR⁶R⁷ steht und R⁶ und R⁷ für H, C₂-C₄-Hydroxyethyl oder -R⁸NR⁶R⁷ und R⁸ für (CH₂)₂ steht, wobei im Mittel > 40%, insbesondere > 60% und besonders bevorzugt > 80% der ethoxilierbaren NH-Funktionen des Polyethylenimins mit Ethylenoxid umgesetzt sind.

### (4) Verbindungen der Formel VIe

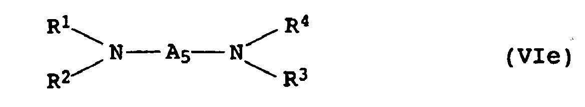

worin
- A₅: für C₆-C₁₈-Alkylen steht, das durch mindestens eine NR⁵-Gruppe unterbrochen ist, wobei R⁵ für (CH₂)ₙR⁶R⁷ oder C₁-C₄-Alkyl steht, das gegebenenfalls durch wenigstens eine NR⁵-Gruppe, worin R⁵ für (CH₂)ₙR⁶R⁷ oder C₁-C₄-Alkyl steht, unterbrochen und/oder durch mindestens eine NR⁶R⁷-Gruppe substituiert ist,
- n: für 2 oder 3 steht und
- R¹, R², R³, R⁴, R⁶ und R⁷: unabhängig voneinander für C₂-C₄-Hydroxyalkyl oder H stehen.

Besonders brauchbare Verbindungen dieses Typs sind Polyamine der Formeln:

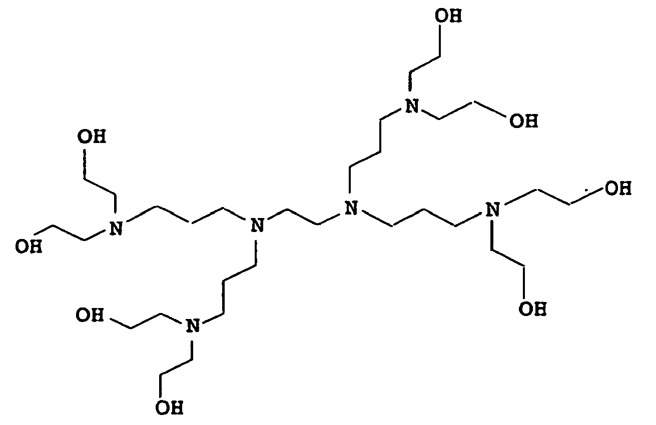

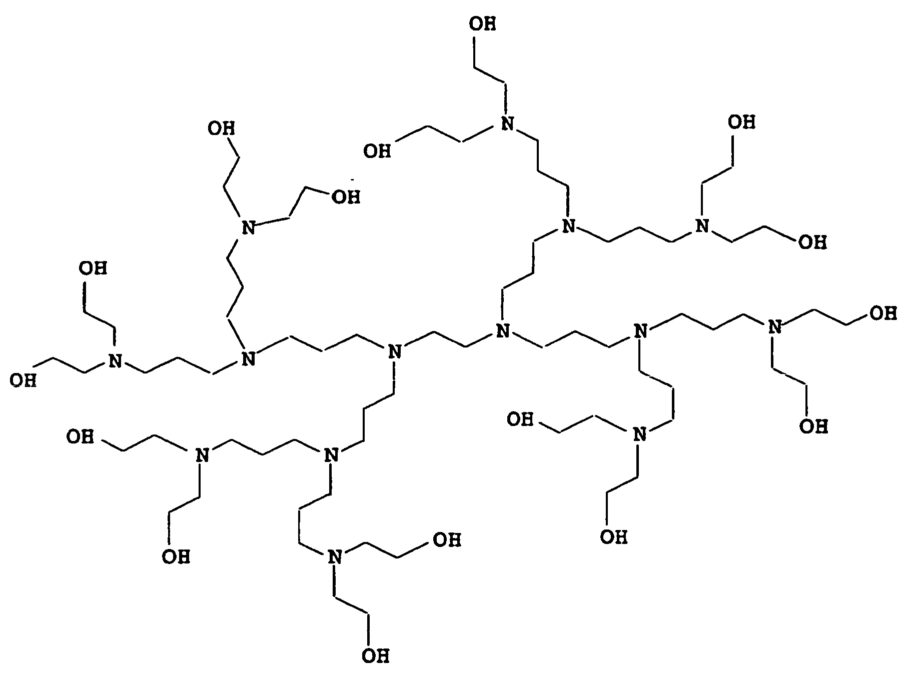

### (5) Verbindungen der Formel VIf

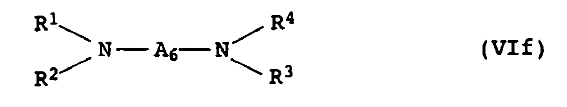

worin
- A₆: für C₂-C₁₂-Alkylen steht, das durch mindestens ein Sauerstoffatom unterbrochen ist und
- R¹, R², R³ und R⁴: unabhängig voneinander für C₂-C₄-Hydroxyalkyl oder H stehen.

Vorzugsweise ist die Alkylenkette durch 1, 2 oder 3 Sauerstoffatome unterbrochen. Besonders brauchbare Verbindungen dieses Typs sind die Verbindungen folgender Formeln:

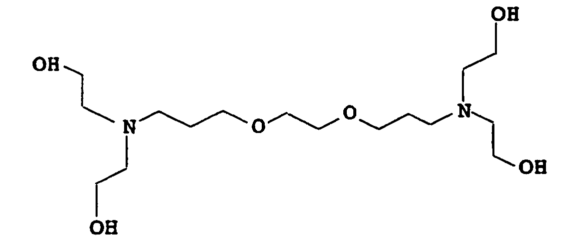

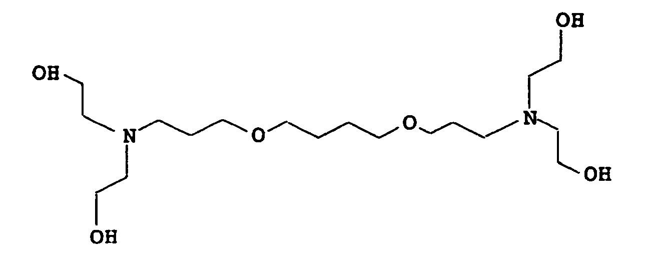

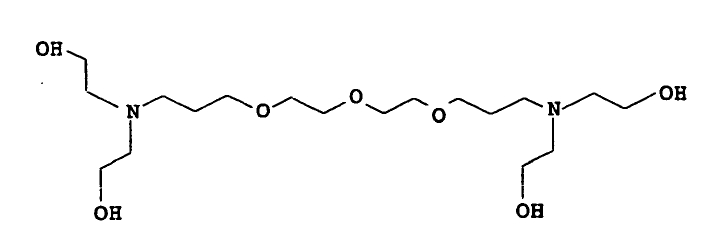

### (6) Verbindungen der Formel VIg

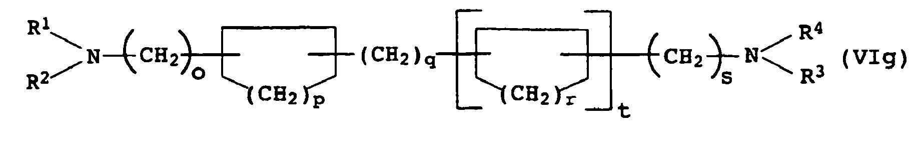

worin
o, q und s unabhängig voneinander für 0 oder eine ganze Zahl im Bereich von 1 bis 6 stehen;
p und r unabhängig voneinander für 1 oder 2 stehen und
t für 0,1 oder 2 steht,
wobei die cycloaliphatischen Ringe auch durch 1, 2 oder 3 C₁-C₄-Alkylreste substituiert sein können, und
R¹, R², R³ und R⁴ unabhängig voneinander für C₂-C₄-Hydroxyalkyl oder H stehen.

Besonders brauchbare Verbindungen dieses Typs sind

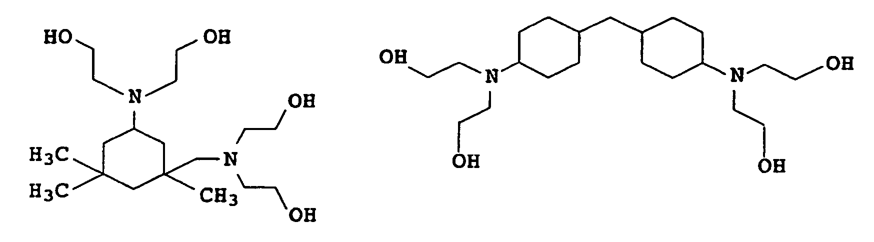

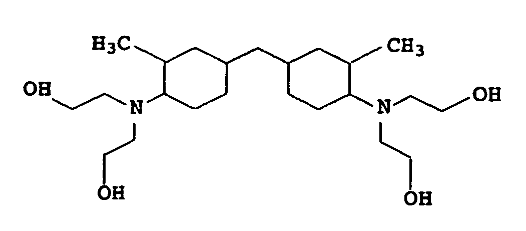

### (7) Polyalkanolamine, die erhältlich sind durch Kondensation von Di- oder Trialkanolaminen mit sich selbst oder untereinander, gegebenenfalls in Gegenwart von ein- bzw. mehrwertigen Alkoholen oder ein- bzw. mehrwertigen Aminen.

Ein Beispiel für derartige oligomere oder polymere Verbindungen ist das aus Triethanol hergestellte Kondensationsprodukt, das idealisiert durch folgende schematische Formel wiedergegeben wird:

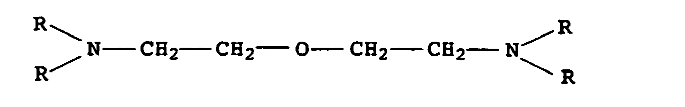

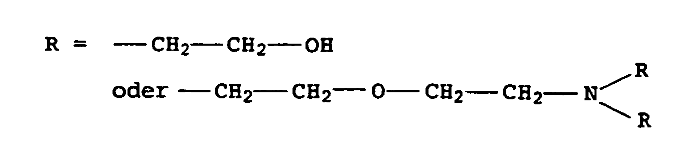

Die Verbindungen der Formel VI und ihre Herstellung ist bekannt, z.B. aus der DE-A 19621573 und der darin genannten Literatur.

Bevorzugte Amine mit wenigstens zwei Hydroxylgruppen in dieser Ausführungsform der Erfindung sind Amine der allgemeinen Formeln IV oder VI mit wenigstens zwei 2-Hydroxyethylgruppen. Vorzugsweise weisen die Verbindungen der Formeln IV und VI Molekulargewichte unterhalb 1000 g/mol auf. Besonders bevorzugt sind hierunter Diethanolamin, Triethanolamin, ethoxiliertes Diethylentriamin, worin im Mittel jedes NH-Wasserstoffatom des Diethylentriamins durch eine 2-Hydroxyethylengruppe ersetzt ist.

Selbstverständlich können die erfindungsgemäßen Bindemittel sowohl ein hydroxylgruppen-haltiges Amin mit langkettigem Kohlenwasserstoffrest als auch ein davon verschiedenes Amin mit wenigstens zwei Hydroxylgruppen enthalten.

Zusätzlich können die erfindungsgemäßen Bindemittelpulver auch β-Hydroxyalkylamide, bevorzugt die in der US-5 143 582 genannten β-Hydroxyalkylamide der Formel 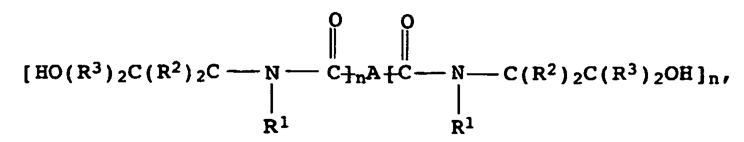 enthalten. Besonders bevorzugt sind die β-Hydroxyalkylamide der vorstehenden Formel, in der R¹ Wasserstoff, eine kurzkettige Alkylgruppe oder HO(R³)₂C(R²)₂C-, n und n' jeweils 1, -A- eine -(CH₂)ₘ-Gruppe, m 0 bis 8, bevorzugt 2 bis 8, R² jeweils Wasserstoff, und eine der R³-Gruppen jeweils Wasserstoff und die andere Wasserstoff oder C₁-C₅-Alkyl sind. Besonders bevorzugt ist Bis[N,N-di(2-hydroxyethyl)]adipinsäureamid.

Die Zugabe von Aminen mit wenigstens zwei Hydroxylgruppen sowie von β-Hydroxyalkylamiden bewirkt im Allgemeinen eine bessere Härtung der erfindungsgemäßen Zusammensetzungen bei gegebener Härtungstemperatur bzw. eine Aushärtung bei niedriger Temperatur bei vorgegebener Härtungszeit. Der Gewichtsanteil der Vernetzer relativ zur Summe aus Polymerisat A1 und A2 beträgt 0 bis 30 Gew.-%, vorzugsweise 0,1 bis 15 Gew.-%.

Weiterhin kann den erfindungsgemäßen Bindemitteln ein Reaktionsbeschleuniger zugesetzt werden. Bevorzugt sind dabei phosphorhaltige Verbindungen, insbesondere hypophosphorige Säure sowie deren Alkali- und Erdalkalisalze oder Alkali-Tetrafluoroborate. Auch Salze von Mn(II), Ca(II), Zn(II), Al(III), Sb(III) oder Ti(IV) oder starke Säuren wie para-Toluolsulfonsäure, Trichloressigsäure und Chlorsulfonsäure können als Reaktionsbeschleuniger zugesetzt werden. Der Gewichtsanteil des Reaktionsbeschleuniger relativ zur Summe aus Polymerisat A1 und A2 beträgt 0 bis 5 Gew.-%, vorzugsweise 0,1 bis 2 Gew.-%. Reaktionsbeschleuniger sind jedoch nicht zwingend erforderlich und werden in bevorzugten Ausführungsformen der Erfindung nicht eingesetzt.

Besonders bevorzugt sind Bindemittel, enthaltend

| | |
|---|---|
| 70 bis 50 Gew.-% | Polymerisat A1, |
| 30 bis 50 Gew.-% | Polymerisat A2 und gegebenenfalls |
| 0 bis 20 Gew.-% | wenigstens eines eine Hydroxygruppe enthaltenden Amins, |
| 0 bis 5 Gew.-% | Reaktionsbeschleuniger. |

In der Regel werden die erfindungsgemäßen Bindemittelpulver durch Entfernen der wässrigen Bestandteile aus einer wässrigen Dispersion des Polymerisats A1, die das wenigstens eine Hydroxylgruppe aufweisende Amin und das Polymerisat A2 enthält, nach üblichen Verfahren der Pulverherstellung hergestellt. Vorzugsweise erfolgt das Entfernen des Wassers nach der Methode der Sprühtrocknung. Außerdem kann man, sofern man nach der Methode der Sprühtrocknung arbeitet, eine wässrige Lösung des Polymers A2 und eine wässrige Dispersion des Polymerisats A1 gemeinsam trocknen, vorzugsweise sprühtrocknen, wobei sowohl die Dispersion des Polymerisats A1 als auch die Lösung des Polymerisats A2 das wenigstens eine Hydroxylgruppe aufweisende Amin enthalten können.

In dem Verfahren zur Herstellung der erfindungsgemäßen Bindemittel hat es sich bewährt, wenn man das Polymerisat A1 in Gegenwart des Polymerisats A2 nach der Methode der radikalischen wässrigen Emulsionspolymerisation herstellt. Demnach betrifft eine bevorzugte Ausführungsform der Erfindung ein Verfahren zur Herstellung thermisch härtbarer polymerer Bindemittel umfassend:
- Herstellen einer thermisch härtbaren, wässrigen Zusammensetzung durch
   i) wässrige Emulsionspolymerisation der das Polymerisat A1 bildenden Monomere in Gegenwart wenigstens eines Polymerisats A2, und gegebenenfalls in Gegenwart des wenigstens eine Hydroxylgruppe aufweisenden Amins und/oder weiterer Komponenten,
   ii) gegebenenfalls Zugabe mindestens einer weiteren Komponente zu der in Schritt i) erhaltenen Dispersion, die ausgewählt ist unter den vorstehend beschriebenen, wenigstens eine Hydroxylgruppe enthaltenden Aminen, Reaktionsbeschleunigern, weiteren üblichen Zusatzstoffen und Gemischen davon,
- gegebenenfalls Koagulation der Zusammensetzung und
- Entfernen des Wassers, vorzugsweise durch Verdampfen unter Bildung eines Pulvers.

Gewünschtenfalls kann im Anschluss an die Koagulation oder Entwässerung eine Filtration nach üblichen Verfahren durchgeführt werden.

Außerdem kann man die erfindungsgemäßen Bindemittelpulver herstellen, indem man zunächst eine wässrige Dispersion des Polymerisats A1, vorzugsweise nach dem Verfahren der radikalischen wässrigen Emulsionspolymerisation, herstellt, diese durch Verdampfen des Wassers in ein Polymerisatpulver überführt und dieses Pulver mit der gewünschten Menge einer wässrigen Lösung des Polymers A2 und des wenigstens eine Hydroxylgruppe enthaltenden Amins versetzt und erneut trocknet. Hierbei geht man beispielsweise so vor, dass man das Polymerisat in einem Sprühtrockner vorlegt oder über eine Feststoffzufuhr zuführt und das Polymer A2 und das wenigstens eine Hydroxylgruppe enthaltende Amin in Form einer oder zweier separater wässriger Lösungen dem Trockner zuführt. Hierbei kommt es zunächst zu einer Benetzung des Pulvers aus Polymerisat A1 mit den Lösungen aus Amin und Polymerisat A2 und anschließend zur Bildung eines festen Pulvers mit der erfindungsgemäßen Zusammensetzung.

Die Herstellung des Polymerisats A1 erfolgt in der Regel durch wässrige Emulsionspolymerisation der vorgenannten ethylenisch ungesättigten Monomeren in Gegenwart wenigstens eines oberflächenaktiven Mittels und eines radikalischen Polymerisationsinitiators, wobei eine batch-, eine semi-kontinuierliche oder eine kontinuierliche Fahrweise möglich ist. Es ist vorteilhaft, das Polymerisat A2 zusammen mit den Monomeren des Polymerisats A1 in Form eines Emulsionszulaufes dem Reaktionsgefäß zuzudosieren. Gewünschtenfalls können die das Polymerisat A1 bildenden Monomere und das Polymerisat A2 teilweise oder vollständig über zwei oder mehrere getrennte Zuläufe dem Reaktionsgefäß zugeführt werden. Die Monomeren können sowohl in voremulgierter als auch in nichtvoremulgierter Form dem Reaktionsgefäß zugeführt werden. Nach einer bevorzugten Ausführungsform wird wenigstens ein Teil des Polymerisats A2 zusammen mit wenigstens einer Monomerkomponente von A1 dem Reaktionsgefäß zugeführt. Vorteilhafterweise werden dabei im Allgemeinen erfindungsgemäße wässrige Polymerdispersionen erhalten, die eine geringere Viskosität aufweisen, als herkömmliche Dispersionen.

Das Polymerisat A2 kann auch teilweise oder vollständig im Reaktor vorgelegt werden. Die Verwendung einer definierten Menge eines im Polymerisationsreaktor vorgelegten Saat-Latex ist zur gezielten Einstellung einer Teilchengrößenverteilung in den erfindungsgemäßen Polymerdispersionen vorteilhaft. Es können 0 bis 25 Gew.-%, bevorzugt 0,01 bis 10 Gew.-%, insbesondere 0,1 bis 5 Gew.-% Saatlatex, bezogen auf das Polymerisat A1, eingesetzt werden.

Die Herstellung der Polymerdispersion erfolgt in der Regel in Wasser als Dispergiermedium. Es können jedoch auch mit Wasser mischbare organische Lösungsmittel, wie Alkohole und Ketone, beispielsweise Methanol, Ethanol, n-Propanol, iso-Propanol, n-Butanol, Aceton oder Methylethylketon, bis zu einem Anteil von etwa 30 Vol.-% enthalten sein.

Zur Herstellung der wässrigen Dispersionen der Polymerisate A1 können die üblicherweise bei einer Emulsionspolymerisation verwendeten Emulgatoren und Schutzkolloide eingesetzt werden. Vorzugsweise werden keine Schutzkolloide eingesetzt. In der Regel wird man die Emulgatoren in einer Gesamtmenge von 0,1 bis 20 Gew.-%, bezogen auf die das Polymerisat A1 bildenden Monomere einsetzen.

Die Emulgatoren können anionischer oder nichtionischer Natur sein. Beispiele für anionische Emulgatoren sind Salze, vorzugsweise Alkalimetall- und insbesondere Natriumsalze oder Ammoniumsalze von Alkylbenzolsulfonsäuren, sulfonierten Fettsäuren, Alkylestern der Sulfobernsteinsäure, von Schwefelsäurehalbestern von Fettalkoholen, ethoxilierten Fettalkoholen mit Ethoxilierungsgraden vorzugsweise im Bereich von 2 bis 50, von Alkylphenolen und ethoxilierten Alkylphenolen.

Als nichtionische Emulgatoren können beispielsweise Ethoxylate von Alkylphenolen, Fettalkoholen, Oxoalkoholen oder Fettsäuren mit Ethoxilierungsgraden im Bereich von vorzugsweise 2 bis 50, weiterhin EO/PO-Blockcopolymere oder Alkylpolyglycoside verwendet werden.

Anstelle oder zusammen mit den vorgenannten Emulgatoren kann als oberflächenaktive Substanz auch das vorstehend beschriebene Hydroxylgruppen-tragende Amin mit langkettigem Kohlenwasserstoffrest und insbesondere das Amin der allgemeinen Formel R^{c}NR^{a}R^{b} eingesetzt werden, insbesondere wenn wenigstens einer der Reste R^{a} oder R^{b} für einen Rest der Formel II oder III steht.

Vorzugsweise werden der so hergestellten wässrigen Dispersion aus Polymerisat A1 und A2 keine weiteren Emulgatoren zugesetzt.

Die Polymerisation in Schritt i) wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z. B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z. B. Mischungen aus Wasserstoffperoxid und Natriumperoxidisulfat. Für die Polymerisation in wässrigem Medium werden bevorzugt wasserlösliche Initiatoren eingesetzt.

Um Polymerisate A1 mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden im Allgemeinen in Mengen von 0,05 bis 5 Gew.-%, bezogen auf die Monomere, eingesetzt.

Die in dem erfindungsgemäßen Bindemittel gegebenenfalls zusätzlich enthaltenen Komponenten, wie Vernetzer, Reaktionsbeschleuniger etc., werden nach dem Ende der Emulsionspolymerisation in Schritt ii) zugegeben.

Die Dispersionen der Polymere A1, die gegebenenfalls das Polymerisat A2 enthalten, sind feinteilige, stabile Latices. Die gewichtsmittlere Teilchengröße der Latexpartikel beträgt etwa 10 bis 1 500 nm, bevorzugt 20 bis 1 000 nm, besonders bevorzugt 30 bis 500 nm, gemessen mit Hilfe der analytischen Ultrazentrifuge (AUZ).

Die wässrigen Bindemitteldispersionen haben vor ihrer Trocknung zu den erfindungsgemäßen Pulvern einen Gehalt an nicht flüchtigen Anteilen (Feststoffgehalt) im Bereich von etwa 20 bis 75 Gew.-%, bevorzugt 25 bis 65 Gew.-%. Die Viskosität (bei einem Feststoffgehalt von 40 Gew.-%) liegt im Allgemeinen in einem Bereich von etwa 10 bis 4 000 mPas, gemessen mit einem Rotationsviskosimeter gemäß DIN 53019 bei 23 °C und einer Schergeschwindigkeit von 250 s⁻¹. Zusätzlich zu den genannten Bestandteilen können die erfindungsgemäßen Bindemittel übliche Zusätze je nach Anwendungszweck enthalten.

Weiterhin können die Bindemittel je nach Anwendungszweck Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten.

Schließlich können die erfindungsgemäßen Bindemittel übliche Brandschutzmittel, wie z. B. Aluminiumsilikate, Aluminiumhydroxide, Borate und/oder Phosphate enthalten.

Häufig enthalten die Bindemittel auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die erfindungsgemäßen Bindemittel können auch in Abmischung mit anderen Bindemitteln, wie beispielsweise Harnstoff-Formaldehyd-Harzen, Melamin-Formaldehyd-Harzen oder Phenol-Formaldehyd-Harzen, sowie mit Epoxidharzen eingesetzt werden.

Die erfindungsgemäßen Zusammensetzungen, d. h. Bindemittel und Zusätze, sind formaldehydfrei. Formaldehydfrei bedeutet, dass die erfindungsgemäßen Zusammensetzungen keine wesentlichen Mengen an Formaldehyd enthalten und auch bei Trocknung und/oder Härtung keine wesentlichen Mengen an Formaldehyd freigesetzt werden. Im Allgemeinen enthalten die Zusammensetzungen < 100 ppm Formaldehyd. Sie ermöglichen die Herstellung von Formkörpern mit kurzer Härtungszeit und verleihen den Formkörpern ausgezeichnete mechanische Eigenschaften.

Die erfindungsgemäßen thermisch härtbaren, formaldehydfreien Bindemittel sind vor der Anwendung im Wesentlichen unvernetzt und daher thermoplastisch. Wenn erforderlich, kann jedoch ein geringer Grad an Vorvernetzung des Polymerisats A1 eingestellt werden, z. B. durch Verwendung von Monomeren mit zwei oder mehr polymerisierbaren Gruppen.

Gewünschtenfalls können die nach dem erfindungsgemäßen Verfahren erhaltenen, thermisch härtbaren wässrigen Zusammensetzungen vor dem Trocknen agglomeriert werden. Geeignete Verfahren zur Agglomeration umfassen Druck-, Gefrier- und chemische Agglomeration. Bei der Gefrieragglomeration werden die Dispersionen in Schichten gefroren, wobei man eine partielle kolloidale Instabilität erzeugt, die zu einer zusammenlagerung der Latexpartikel führt, und anschließend wieder aufgetaut wird. Bei der chemischen Agglomeration wird den feinteiligen Polymerdispersionen ein Agglomerationsmittel zugesetzt, um einen kontrollierten Agglomerationsprozess einzuleiten. Geeignete Agglomerationsmittel sind z. B. vernetzte Polyurethane und Polyalkylenoxide.

Ein Verfahren zur Erhöhung der mittleren Teilchengröße durch Druckagglomeration ist z. B. das Strömen durch eine Drossel.

Das erfindungsgemäße pulverförmige Bindemittel wird dann durch Trocknung der Zusammensetzung, z. B. durch Sprühtrocknung, Gefriertrocknung oder Wirbelschichttrocknung gewonnen. Ein weiteres Verfahren zur Herstellung des Pulvers aus der Dispersion ist die Koagulation und anschließende Trocknung oder Filtration.

Die bevorzugte Sprühtrocknung wird in üblichen Sprühtrocknungsanlagen durchgeführt, wobei die Zerstäubung mittels Ein-, Zwei- oder Mehrstoffdüsen oder mit einer rotierenden Scheibe erfolgen kann. Die Austrittstemperatur wird im Allgemeinen in einem Bereich von ca. 55 bis 100 °c, bevorzugt 65 bis 90 °C, gewählt.

Zur Sprühtrocknung wird die Dispersion des Polymerisats mit einem Festgehalt von vorzugsweise 20 % bis 70 %, gegebenenfalls gemeinsam mit Schutzkolloiden und/oder Mitteln zur Verbesserung der Rieselfähigkeit als Sprühhilfsmittel versprüht und getrocknet werden. Als Schutzkolloide können dabei die für die Sprühtrocknung wässriger Polymerdispersionen üblichen hydrophilen Oligomere und Polymere eingesetzt werden, wobei die Schutzkolloide der wässrigen Dispersion vor dem Sprühtrocknen, in Form einer wässrigen Lösung, zugegeben werden können. Sofern erwünscht, werden bei diesem Verfahrensschritt 1 bis 20 Gew.-%, vorzugsweise 5 bis 20 Gew.-% Schutzkolloid, bezogen auf das Polymerisat, zugesetzt. Vorzugsweise werden bei der Trocknung der wässrigen Polymerdispersion aus Polymer A1 und A2 und den gegebenenfalls anwesenden Zusätzen und sonstigen Hilfsmitteln keine weiteren Schutzkolloide zugesetzt. Als Mittel zur Verbesserung der Rieselfähigkeit kommen die hierfür üblichen Anorganischen Oxide, beispielsweise feinteilige Kieselsäure in Betracht. Mittel zur Verbesserung der Rieselfähigkeit werden, in der Regel in einer Menge von bis zu 5 Gew.-%, z.B. von 0,1 bis 5 Gew.-%, bezogen auf das Polymerisat, eingesetzt.

Das erfindungsgemäße Bindemittel in Pulverform kann in der Regel ohne die Mitverwendung von Sprühhilfsmitteln durch Trocknen der wässrigen Dispersion erhalten werden.

Pulverförmige Bindemittel haben den Vorteil, dass sie gut lagerbar und transportierbar sind, keinen Trocknungsaufwand im Formteil erfordern und mit faserigen und körnigen Substratmaterialien besonders gut mischbar bzw. in ihnen verteilbar sind.

Die erfindungsgemäßen pulverförmigen Bindemittel sind vorteilhafterweise vollständig oder nahezu vollständig in Wasser redispergierbar.

Das thermisch aushärtbare polymere Dispersionspulver und dessen wässrige Redispergate eignen sich zur Herstellung von Formteilen sowie insbesondere zur Verfestigung faseriger oder körniger Substratmaterialien. In Frage kommen beispielsweise natürliche Materialien, wie Holzschnitzel, Holzfasern, Textilfasern, Glasfasern, Mineralfasern und Naturfasern, wie Jute, Flachs, Hanf oder Sisal, Korkschnitzel, Sand, Cellulosefasern, Wolle, Baumwolle, aber auch Kunstfasern, insbesondere Kunstfasern auf der Basis von faserbildenden Polymeren.

Bei Verwendung der erfindungsgemäßen Bindemittel oder aus ihnen erhaltenen Polymerdispersionen für faserige und körnige Substrate, wie z. B. Holzschnitzel, Holzfasern, Textilfasern, Glasfasern, Mineralfasern oder Naturfasern wie Jute, Flachs, Hanf oder Sisal, aber auch Korkschnitzel oder Sand, werden nach Härtung gebundene Substrate mit einer hohen mechanischen Festigkeit erhalten, die auch im Feuchtklima ihre Dimensionsstabilität behalten. Bevorzugt ist die thermische Härtung. Die Härtungstemperaturen betragen im Allgemeinen 80 bis 250 °C, vorzugsweise 100 bis 200 °C.

Unter Härtung wird in diesem Zusammenhang die chemische Veränderung der Zusammensetzung verstanden, z. B. die Vernetzung durch Knüpfung von kovalenten Bindungen zwischen den verschiedenen Bestandteilen der Zusammensetzungen, Bildungen von ionischen Wechselwirkungen und Clustern, Bildung von Wasserstoffbrücken. Weiterhin können bei der Härtung auch physikalische Veränderungen im Bindemittel ablaufen, wie z. B. Phasenumwandlungen oder Phaseninversionen. Ein Vorteil der erfindungsgemäßen Zusammensetzungen ist, dass ihre Härtung bei vergleichsweise niedrigen Temperaturen erfolgen kann. Die Dauer und die Temperatur der Erwärmung beeinflussen den Aushärtungsgrad.

Die Aushärtung kann auch in zwei oder mehr Stufen erfolgen. So kann z. B. in einem ersten Schritt die Härtungstemperatur und -zeit so gewählt werden, dass nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen möglich, die an anderer Stelle verformt und ausgehärtet werden können.

Ein weiterer Gegenstand der Erfindung ist ein gebundenes Substrat, erhältlich durch Behandeln eines faserigen oder körnigen Substratmaterials mit einem erfindungsgemäßen pulverförmigen Bindemittel oder einer wässrigen Polymerdispersion davon und anschließende Härtung. Bevorzugt liegt das Substrat in Form eines Formkörpers vor. Die Formkörper haben bevorzugt eine Dichte von 0,2 bis 1,4 g/cm³ bei 23 °C.

Zur Herstellung der Formkörper wird das pulverförmige Bindemittel auf das, gegebenenfalls mechanisch vorverfestigte, Substratmaterial aufgestreut, eingestreut, eingerüttelt oder direkt mit dem Fasermaterial vermischt. Soll das Bindemittel aufgestreut, eingestreut oder eingerüttelt werden, wird das Substratmaterial bevorzugt flächenhaft ausgebreitet und gegebenenfalls verdichtet. Vor dem Aufstreuen des Bindemittels kann das Substrat auch mit Wasser angefeuchtet werden. Dadurch wird eine Vorbindung des Substratmaterials erreicht, wodurch das Substrat vorgebunden, aber nicht vernetzt transportierbar wird. Bei Bindemittel-Lösungen oder -Dispersionen ist eine derartige Vorbindung nicht möglich, da diese nicht mehr reaktivierbar sind.

Als Formkörper kommen insbesondere Platten und konturierte Formteile in Betracht. Ihre Dicke beträgt im Allgemeinen mindestens 1 mm, vorzugsweise mindestens 2 mm, ihre Oberfläche beträgt typischerweise 200 bis 200 000 cm². In Betracht kommen insbesondere Holzfaser- und Spanplatten, Korkplatten, -blöcke und -formen, Dämmstoffplatten und -rollen, z. B. aus Mineral- und Glasfasern, Automobilinnenteile, z. B. Türinnenverkleidungen, Armaturenträger, Hutablagen, etc.

Die Gewichtsmenge des erfindungsgemäßen Polymerpulvers beträgt im Allgemeinen 0,5 bis 40 Gew.-%, vorzugsweise 1 bis 30 Gew.-%, bezogen auf das Substrat (Fasern, Schnitzel oder Späne).

Die Fasern, Schnitzel oder Späne können direkt mit dem Bindemittel beschichtet werden oder mit dem pulverförmigen Bindemittel vermischt werden. Die Viskosität des wässrigen Bindemittels wird vorzugsweise auf 10 bis 4 000 mPas, bevorzugt auf 30 bis 2 000 mPas (DIN 53019, Rotationsviskosimeter bei 250 sec⁻¹) eingestellt.

Die Mischung aus Fasern, Schnitzeln und Spänen und dem Bindemittel kann z. B. bei Temperaturen von 10 bis 150 °C vorgetrocknet werden und anschließend zu den Formkörpern, z. B. bei Temperaturen von 80 bis 250 °C, vorzugsweise 100 bis 200 °C, und Drücken von im Allgemeinen 2 bis 1 000 bar, vorzugsweise 10 bis 750 bar, besonders bevorzugt 200 bis 500 bar zu den Formkörpern verpresst werden.

Die erfindungsgemäßen Polymerpulver eignen sich insbesondere als Bindemittel zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z. B. Holzspänen und Holzfasern, hergestellt werden können. Die Wasserfestigkeit von Holzwerkstoffen kann erhöht werden, indem man zusammen mit dem Bindemittel eine handelsübliche wässrige Paraffindispersion oder andere Hydrophobierungsmittel verarbeitet, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das Gewichtsverhältnis Bindemittel:Holzspäne vorzugsweise 0,02:1 bis 0,3:1 beträgt.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250 °C, bevorzugt von 120 bis 225 °C durch Anwendung von Drücken von üblicherweise 10 bis 750 bar zu einer Platte verpresst. Die benötigten Presszeiten können in einem weiten Bereich variieren und liegen im Allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180 °C hergestellt werden.

Zur Beleimung werden die Holzfasern im Allgemeinen mit einem Luftstrom aufgewirbelt und das Bindemittel in den so erzeugten Fasernstrom eingedüst ("Blow-Line" Verfahren). Das Verhältnis Holzfasern zu Bindemittel, bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z. B. 130 bis 180 °C getrocknet, zu einem Faservlies ausgestreut und bei Drücken von 10 bis 50 bar zu Platten oder Formkörpern verpresst.

Die beleimten Holzfasern können auch, wie z. B. in der DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z. B. Türinnenverkleidungen von Kraftfahrzeugen weiterverarbeitet werden.

Auch andere Naturfaserstoffe, wie Sisal, Jute, Hanf, Flachs, Kokosfasern, Bananenfasern und andere Naturfasern können mit den Bindemitteln zu Platten und Formteile verarbeitet werden. Die Naturfaserstoffe können auch in Mischungen mit Kunststofffasern, z. B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen.

Die erfindungsgemäß erhaltenen gebundenen Substrate haben eine geringe Wasseraufnahme, eine niedrige Dickenquellung nach Wasserlagerung, eine gute Festigkeit und sind formaldehydfrei.

Außerdem kann man die erfindungsgemäßen Polymerpulver als Bindemittel für Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Die Beschichtungs- und Imprägniermassen verleihen den Platten einen hohen Biegemodul. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2 000 mm.

Ferner können die erfindungsgemäßen Polymerpulver in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc. und Haftvermittler sowie Konservierungsmittel.

Die Komponenten des erfindungsgemäßen Polymerpulvers sind in der Beschichtungsmasse im Allgemeinen in einer Menge von 1 bis 65 Gew.-% enthalten. Der Anteil der inerten Füllstoffe liegt im Allgemeinen bei 0 bis 85 Gew.-%. Der Wasseranteil der Beschichtungsmasse beträgt mindestens 10 Gew.-%.

Die Anwendung der Beschichtungsmassen erfolgt in üblicher Weise durch Auftragen auf ein Substrat, beispielsweise durch Sprühen, Rollen, Gießen oder Imprägnieren. Die aufgetragenen Mengen, bezogen auf den Trockengehalt der Zusammensetzung, betragen im Allgemeinen 2 bis 100 g/m².

Die einzusetzenden Mengen an Zusatzstoffen sind dem Fachmann bekannt und richten sich im Einzelfall nach den gewünschten Eigenschaften und dem Anwendungszweck.

Die erfindungsgemäßen Zusammensetzungen sind auch als Bindemittel für Dämmstoffe aus anorganischen Fasern, wie Mineralfasern und Glasfasern brauchbar. Solche Dämmstoffe werden technisch durch verspinnen von Schmelzen der entsprechenden mineralischen Rohstoffe hergestellt, siehe US-A-2,550,465, US-A-2,604,427, US-A-2,830,648, EP-A-354 913 und EP-A-567 480. Die Zusammensetzung wird dann in die frisch hergestellten, noch heißen anorganischen Fasern eingearbeitet. Die Zusammensetzung bleibt dabei im Wesentlichen unausgehärtet als viskose Masse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200 °C zu einer steifen Matrix aus. Nach dem Härten werden die Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die erfindungsgemäßen Zusammensetzungen eignen sich außerdem als Bindemittel für Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z. B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Zusammensetzungen z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d. h. verfestigt.

Dazu wird das erfindungsgemäße Polymerpulver vorzugsweise im Gewichtsverhältnis Faser/Bindemittel von 10:1 bis 1:1, besonders bevorzugt von 6:1 bis 3:1 auf das Rohfaservlies in der hierfür üblichen Weise, z. B. durch Einblasen mit dem Fasermaterial aufgebracht.

Nach dem Einarbeiten des Polymerpulvers in das Rohfaservlies erfolgt im Allgemeinen eine Härtung vorzugsweise bei 100 bis 400 °C, insbesondere 130 bis 280 °C, ganz besonders bevorzugt 130 bis 230 °C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z. B. aus PVC.

Bei der Verwendung als Dachbahnen werden die gebundenen Faservliese im Allgemeinen mit Bitumen beschichtet.

Die erfindungsgemäßen Zusammensetzungen sind weiterhin geeignet als formaldehydfreie Sandbindemittel zur Herstellung von Gussformen und Gusskernen für den Metallguss nach den üblichen thermischen Härtungsverfahren (E. Flemming, W. Tilch, Formstoffe und Formverfahren, Dt. Verlag für Grundstoffindustrie, Stuttgart, 1993).

Weiterhin eignen sie sich als Bindemittel für Kokillendämmplatten.

Die nachfolgenden, nicht einschränkenden Beispiele erläutern die Erfindung.

Die nichtflüchtigen Anteile wurden in einem Umluft-Trockenschrank aus dem Gewichtsverlust einer 1 g Probe bestimmt, die zwei Stunden lang bei 120 °C getrocknet wurde.

Die Viskosität der Zusammensetzungen wurde in einem Rheomat der Fa. Physica gemäß DIN 53019 bei einer Schergeschwindigkeit von 250 sec⁻¹ und einer Temperatur von 23 °c bestimmt.

Der K-Wert der Polymere A2 wurde nach Fikentscher (DIN 53276) bestimmt.

Der pH-Wert wurde mit einem handylab 1 pH-Meter der Fa. Schott bestimmt.

Die Verdünnbarkeit wurde durch sukzessive Verdünnung einer Dispersionsprobe mit vollentsalztem Wasser untersucht, wobei eine sichtbare Agglomerat-Bildung zu einer negativen Beurteilung führte.

### Herstellung der zur Trocknung eingesetzten Dispersionen D1 bis D6

### Beispiel 1a (Herstellung eines carboxylgruppenhaltigen Polymerisats A2)

In einem Druckreaktor mit Ankerrührer werden 0,66 kg vollentsalztes Wasser, 0,82 kg Maleinsäureanhydrid sowie 0,45 kg einer 40 gew.-%igen wässrigen Lösung eines ethoxylierten Oleylamins (mittlerer Ethoxylierungsgrad = 12, z. B. Lutensol®FA Marken der Fa. BASF AG) vorgelegt. Unter Stickstoffatmosphäre wird auf 125 °C erwärmt. Nach Erreichen dieser Temperatur wird innerhalb von 4 h Zulauf 1, bestehend aus 0,90 kg vollentsalztem Wasser und 0,82 kg Acrylsäure sowie innerhalb von 5 h Zulauf 2, bestehend aus 0,26 kg vollentsalztem Wasser und 0,14 kg H₂O₂ (30 gew.-%ig) gleichmäßig zudosiert. Nach Ende von Zulauf 1 werden weitere 0,13 kg vollentsalztes Wasser zugegeben. Nach Ende der Reaktion wird auf Raumtemperatur abgekühlt. Die so erhaltene wässrige Polymerisat-Lösung hat einen Feststoffgehalt von 43,2 %, einen pH-Wert von 1,8 und eine Viskosität von 72 mPas. Der K-Wert beträgt 9,0.

### Beispiel 1b: (Herstellung des Polymerisats A1, Dispersion D1)

In einem 4 l Glasgefäß mit Ankerrührer werden 896 g Wasser, 780 g einer 50,0 gew.-%igen wässrigen Lösung eines Säurepolymerisats A2 wie in Beispiel 1a beschrieben, 5 Gew.-% von Zulauf 1, enthaltend 618 g 2-Ethylhexylacrylat und 33 g 2-Hydroxyethylacrylat und 10 Gew.-% von Zulauf 2, enthaltend 200 g vollentsalztes Wasser und 6,5 g 2,2'-Azobis(2-amidinopropan)dihydrochlorid vorgelegt und auf 80 °C erhitzt. Nach 10 min werden bei dieser Temperatur die Restmenge des Zulaufs 1 innerhalb von 3 h und die von Zulauf 2 innerhalb von 3,5 h zudosiert. Anschließend wird noch 30 min bei dieser Temperatur nachpolymerisiert und das Reaktionsgemisch abgekühlt. Die so hergestellte Polymerdispersion enthält 39,5 Gew.-% nichtflüchtige Anteile und hat einen pH-Wert von 2,0. Die Viskosität der erhaltenen Polymerdispersion beträgt 16 mPas, der LD-Wert 74.

### Beispiel 2: (Dispersion D2)

In einem 4 l Glasgefäß mit Ankerrührer (220 Upm) werden 708 g Wasser, 1 020 g einer 50,0 gew.-%igen wässrigen Lösung eines Säurepolymerisats A2 wie in Beispiel 1a beschrieben, 5 Gew.-% eines Zulaufs 1, enthaltend 595 g Styrol, 213 g Methylmethacrylat und 43 g 2-Hydroxyethylacrylat und 10 Gew.-% eines Zulaufs 2, enthaltend 150 g vollentsalztes Wasser und 8,5 g Natriumperoxodisulfat, vorgelegt und auf 90 °C erhitzt. Nach 10 min werden bei dieser Temperatur die Restmenge des Zulaufs 1 innerhalb von 3 h und die von Zulauf 2 innerhalb von 3,5 h zudosiert. Anschließend wird noch 30 min bei dieser Temperatur nachpolymerisiert und das Reaktionsgemisch abgekühlt. Die so hergestellte Polymerdispersion enthält 49,3 Gew.-% nichtflüchtige Anteile und hat einen pH-Wert von 1,9. Die Viskosität der erhaltenen Polymerdispersion beträgt 66 mPas.

### Beispiel 3: (Dispersion D3)

386 g der in Beispiel 2 hergestellten Polymerdispersion werden mit 46 g einer wässrigen Lösung von 2,2',2"-Nitrilotriethanol (50 gew.-%ig) vermischt. Die so erhaltene Dispersion hat einen pH-Wert von 3.2.

### Beispiel 4a (Herstellung eines carboxylgruppenhaltigen Polymerisats A2):

In einem Druckreaktor mit Ankerrührer werden 0,60 kg vollentsalztes Wasser, 0,33 kg Maleinsäureanhydrid sowie 0,88 kg einer 40 gew.-%igen wässrigen Lösung eines ethoxylierten Oleylamins (mittlerer Ethoxylierungsgrad = 12, z. B. Lutensol®FA 12 der Fa. BASF AG) vorgelegt. Unter Stickstoffatmosphäre wird auf 125 °C erwärmt. Nach Erreichen dieser Temperatur wird innerhalb von 4 h Zulauf 1, bestehend aus 0,69 kg vollentsalztem Wasser und 0,74 kg Acrylsäure sowie innerhalb von 5 h Zulauf 2, bestehend aus 0,14 kg vollentsalztem Wasser und 0,08 kg H₂O₂ (30 gew.-%ig) gleichmäßig zudosiert. Nach Ende von Zulauf 1 werden weitere 0,10 kg vollentsalztes Wasser zugegeben. Nach Ende der Reaktion wird auf Raumtemperatur abgekühlt. Die so erhaltene wässrige Polymerisat-Lösung hat einen Feststoffgehalt von 37,8 %, einen pH-Wert von 1,8 und eine Viskosität von 305 mPas. Der K-Wert beträgt 13,2.

### Beispiel 4b: (Herstellung eines Polymerisats A1, Dispersion D4)

In einem 4 l Glasgefäß mit Ankerrührer (120 Upm) werden 994 g Wasser und 10 Gew.-% eines Zulaufs 2, enthaltend eine Lösung von 8,0 g Natriumperoxodisulfat in 93 g vollentsalztem Wasser, vorgelegt und auf 85 °C erhitzt. Nach 10 min werden bei dieser Temperatur ein Zulauf 1, enthaltend 560 g Styrol, 200 g Methylmethacrylat, 40 g 2-Hydroxyethylacrylat und 1 042 g eines Säurepolymerisats A2, wie in Beispiel 4a beschrieben, innerhalb von 3 h und die Restmenge des Zulaufs 2 innerhalb von 3,5 h zudosiert. Anschließend wird noch 30 min bei dieser Temperatur nachpolymerisiert und das Reaktionsgemisch abgekühlt. Die so hergestellte Polymerdispersion enthält 40,0 Gew.-% nichtflüchtige Anteile und hat einen pH-Wert von 2,0. Die Viskosität der erhaltenen Polymerdispersion beträgt 56 mPas.

### Beispiel 5: (Dispersion D5)

Zu 475 g der in Beispiel 4b hergestellten Polymerdispersion werden 24 g Adipinsäure-bis(diethanolamid) zugesetzt. Die so erhaltene Dispersion hat einen pH-Wert von 2,1.

### Beispiel 6a (Herstellung eines carboxylgruppenhaltigen Polymerisats A2):

In einem Druckreaktor mit Ankerrührer werden 0,55 kg vollentsalztes Wasser, 0,33 kg Maleinsäureanhydrid sowie 0,66 kg einer 40 gew.-%igen wässrigen Lösung eines ethoxylierten Oleylamins (mittlerer Ethoxylierungsgrad = 12, z. B. Lutensol®FA 12 der Fa. BASF AG) vorgelegt. Unter Stickstoffatmosphäre wird auf 125 °C erwärmt. Nach Erreichen dieser Temperatur wird innerhalb von 4 h Zulauf 1, bestehend aus 0,74 kg vollentsalztem Wasser und 0,92 kg Acrylsäure sowie innerhalb von 5 h Zulauf 2, bestehend aus 0,14 kg vollentsalztem Wasser und 0,08 kg H₂O₂ (30 gew.-%ig) gleichmäßig zudosiert. Nach Ende von Zulauf 1 werden weitere 0,10 kg vollentsalztes Wasser zugegeben. Nach Ende der Reaktion wird auf Raumtemperatur abgekühlt. Die so erhaltene wässrige Polymerisat-Lösung hat einen Feststoffgehalt von 42,2 %, einen pH-Wert von 1,4 und eine Viskosität von 500 mPas. Der K-Wert beträgt 15,4.

### Beispiel 6b: (Herstellung eines Polymerisats A1, Dispersion D6)

In einem 4 l Glasgefäß mit Ankerrührer (120 Upm) werden 711 g Wasser und 10 Gew.-% eines Zulaufs 2, enthaltend eine Lösung von 5,3 g Natriumperoxodisulfat in 93 g vollentsalztem Wasser, vorgelegt und auf 85 °C erhitzt. Nach 10 min werden bei dieser Temperatur ein Zulauf 1, enthaltend 236 g 2-Ethylhexylacrylat, 263 g Methylmethacrylat, 26 g 2-Hydroxyethylacrylat und 1 555 g eines Säurepolymerisats A2, wie in Beispiel 6a beschrieben, innerhalb von 3 h und die Restmenge des Zulaufs 2 innerhalb von 3,5 h zudosiert. Anschließend wird noch 30 min bei dieser Temperatur nachpolymerisiert und das Reaktionsgemisch abgekühlt. Die so hergestellte Polymerdispersion enthält 40,9 Gew.-% nichtflüchtige Anteile und hat einen pH-Wert von 2,0. Die Viskosität der erhaltenen Polymerdispersion beträgt 197 mPas.

### Herstellung der erfindungsgemäßen Polymerpulver P1 bis P6

Die in den Beispielen beschriebenen Polymerdispersionen D1 bis D6 wurden durch Sprühtrocknung mit einer Minor Hi-Tec Sprühtrocknungsanlage der Fa. GEA Niro A/S mit einem mittleren Feststoffgehalt von ca. 30 Gew.-% bei einer Eingangstemperatur von 150 °C und einer Ausgangstemperatur von 80 °C (Zweistoffdüse) ohne Zusatz von Sprühhilfsmitteln zu den Pulvern P1 bis P6 verarbeitet. Die Pulver wiesen eine gute Rieselfähigkeit und gute Redispergierbarkeit in Wasser auf (Ausbeute 52-92 %). Die mittlere Schüttdichte der Dispersionspulver betrug 0,3 g/cm³.

### Herstellung der erfindungsgemäßen Polymerpulver P7 und P8

### P7: Herstellung eines Bindemittelpulvers aus Abmischung von Polymerdispersion und einer thermisch reaktiven Polymerlösung

3 kg einer 35 gew.-%igen wässrigen Lösung aus einem Acrylsäure/Methacrylsäure-Copolymer (AS/MS = 70:30) mit einem K-Wert (nach Fikentscher, bestimmt als 2 gew.-%ige Lösung in Wasser) von 12 und Triethanolamin im Gewichtsverhältnis 10:3 werden vorgelegt.

Hierzu gab man unter Rühren 1 kg einer Mischung aus 990 g einer 35 %igen wässrigen Polymerdispersion (88GT Styrol 10GT Acrylnitril 2 GT Acrylsäure, hergestellt durch Emulsionspolymerisation mit 0,5% Polystyrolsaat der Teilchengröße 30 nm, stabilisiert mit 1 GT Natriumlaurylsulfat, geregelt mit 0,5 GT Ethylhexylthioglycolat, initiiert mit 0,5 GT Natriumpsersulfat, die Teilchengröße der Polymerdispersion beträgt 200 nm gemessen mit Ultrazentrifuge, (d₅₀ der Zahlenverteilung) und 10 g eines ethoxylierten C₁₃-Oxoalkohols mit einem mittleren Ethoxylierungsgrad von 8).

Die Mischung wird in einem Sprühtrockner mit Scheibenzerstäubung getrocknet.
Ausbeute 86%
Teilchengröße: 30 µm als d₅₀-Wert der Volumenverteilung, gemessen mittels Malvern Master Sizer.

### P8: Herstellung eines Bindemittelpulvers durch Aufsprühen einer thermisch reaktiven Polymerlösung auf ein durch Sprühtrocknung hergestelltes Pulver einer Polymerdispersion

Aus einer 40 %igen wässrigen Polymerdispersion (88GT Styrol 10GT Acrylnitril 2 GT Acrylsäure, hergestellt durch Emulsionspolymerisation mit 0,5 % Styrolsaat der Teilchengröße 30 nm, stabilisiert mit 1GT Natriumlaurylsulfat, geregelt mit 0,5GT.Ethylhexylthioglycolat, initiiert mit 0,5 GT Natriumpersulfat, die Teilchengröße der Polymerdispersion beträgt 200 nm gemessen mit Ultrazentrifuge (d₅₀ der Zahlenverteilung)) wird durch Sprühtrocknung ein Pulver hergestellt.
Ausbeute: 94 %
Teilchengröße: 19 µm als d₅₀-Wert der Volumenverteilung gemessen mittels Malvern Master Sizer.

750 g des so hergestellten Dispersionspulvers werden in einem temperierbaren Feststoffmischer (Anfertigung der BASF AG) bei 75°C vorgelegt und bei 45 Upm mit 500 g einer 50%igen wässrigen Lösung aus dem bei P7 beschriebenen Acrylsäure/Methacrylsäure-Copolymer und Triethanolamin im Gewichtsverhältnis 10:3 mittels Zweistoffdüse innerhalb von 160 min besprüht. Anschließend wird noch 1 h bei 70°C und einem Stickstoffstrom von 350 1/h nachgemischt.
Ausbeute: nach Siebung über 1000m Sieb 985 g Pulver (Restfeuchte von 2%) und 53 g Rückstand.
Teilchengröße: 23 µm als d₅₀-Wert der Volumenverteilung, gemessen mittels Malvern Master Sizer.

### Anwendungstechnische Ergebnisse

### A) Prüfung als Bindemittel für feinteilige mineralische Materialien

600 g Quarzsand H34 wurden in einem Keenwood Labormischer zunächst mit jeweils 30 g Dispersionspulver P2, P4, P5 oder P6 vermischt. Dann wurden dieser Mischung unter fortgesetztem Rühren noch 30 g Wasser zugegeben. Aus den feuchten Mischungen wurden in einer Metallform Prüfkörper (Fischer-Riegel) mit den Abmessungen 17 x 2,3 x 2,3 cm geformt, verdichtet und nach dem Entformen 2 h bei 125 °C im Umluftofen ausgehärtet. Zum Verdichten wird eine Ramme vom Typ PRA der Georg Fischer AG eingesetzt.

Die Biegefestigkeit der so hergestellten Fischerriegel bei 23° C wurde im trockenen Zustand sowie im nassen Zustand nach einer Stunde Lagerung in entmineralisiertem Wasser bei 23°C mit einem Festigkeitsprüfapparat Typ PFG mit der Prüfvorrichtung PBV (Fa. Georg Fischer, Schaffhausen/CH) bestimmt. Die Ergebnisse sind in Tabelle 1 dargestellt.

**Tabelle 1**

| Bindemittel | Biegefestigkeit bei 23 °C | |
|---|---|---|
| | trocken [N/cm²] | nass [N/cm²] |
| P2 | 530 | 130 |
| P4 | 540 | 180 |
| P5 | 940 | 660 |
| P6 | 1210 | 260 |

### B) Prüfung als Bindemittel für Korkgranulat

In einem Kenwood Labormischer wurden 75 g getrocknetes Korkgranulat (gereinigter und gemahlener Kork, Schüttdichte 60g/l, mittlere Partikelgröße 1,5 mm) 18,8 g des pulverförmigen Bindemittels P1 und 11,2 g Wasser 2 min vermischt. Die mit Bindemittel beaufschlagten Korkpartikel wurden ohne weitere Trocknung in eine zweiteilige Metallform mit 12,5 x 12,5 cm Innenabmessungen gefüllt und vorverdichtet. Boden und Stempel der Form waren zum Abführen des freigesetzten Wasserdampfs mit Entlüftungslöcher perforiert. Die Metallform wurde in einer auf 120 °C vorgeheizten Presse für 2h bei einem Pressendruck von 100 bar gehalten.

Man erhielt einen Korkblock mit einer Dicke von 3,3 cm und einer Dichte von 0,17 g/cm³. Die Dickenquellung von 5 x 5 x 3,3 cm großen Probenkörpern aus diesem Block nach 24 h Lagerung in entmineralisiertem Wasser bei 23 °C betrug 1,2 %. Nach dreistündigem Kochen in entmineralisiertem Wasser betrug die Dickenquellung 9 %.

### C) Prüfung als Bindemittel für Holzfasern

70 g Holzfasern (thermomechanisch aufgeschlossenes Fichtenholz, mittlere Faserlänge ca. 3 mm, Restfeuchte 7 %) wurden mit 13,2 g Dispersionspulver gut vermischt. Auf diese Faser-Bindemittel Mischung wurden anschließend unter fortgesetztem Mischen noch 14 g Wasser aufgesprüht. Die beleimten Fasern wurden bei 70 °C auf eine Restfeuchte von 10 %atro getrocknet und zu einer 19 x 19 cm großen Fasermatte ausgestreut.

Diese Fasermatten wurden mit einer hydraulischen Presse (Hersteller Fa. Wickert Maschinenbau GmbH, Landau, Modell WKP 600/3,5/3) bei einer Presstemperatur von 220 °C für 120 sec zwischen 2 Metallplatten mit 2 mm Abstandshaltern verpresst. Hierzu wurde zunächst 20 sec ein Pressendruck von 50 bar eingestellt. Dann wurde nach einer 10 sec anhaltenden Druckentlastung noch 90 sec lang ein Druck von 200 bar gehalten.

Die erhaltenen Faserplatten wurden 24 h im Normklima bei 23 °C und 65 % relativer Luftfeuchte gelagert und anschließend geprüft. Die Wasseraufnahme wurde über die Gewichtszunahme (in %, bezogen auf das ursprüngliche Gewicht) bestimmt. Die Dickenquellung der Holzfaserplatten wurde als relative Zunahme der Dicke von 2 x 2 cm großen Probenkörper nach 24 h Lagerung in entmineralisiertem Wasser analog zur DIN 52351 bestimmt. Die Daten sind in Tabelle 2 zusammengestellt.

**Tabelle 2**

| Bindemittel | Wasseraufnahme [%] | Dickenquellung [%] |
|---|---|---|
| P2 | 54 | 31 |
| P3 | 57 | 41 |
| P4 | 52 | 28 |
| P5 | 53 | 30 |
| P6 | 81 | 54 |

Die Wärmestandfestigkeit der Holzfaserplatten wurde an 5 x 15 cm großen Probekörpern gemessen, die auf einer waagrechten Unterlage mit 10 cm Überstand fixiert wurden. Am überstehenden Ende der Probenkörper wurde ein 100 g Gewicht angehängt. Gemessen wurde die Durchbiegung bezogen auf die Waagrechte, die nach 1 h Lagerung bei 120 °C nach Abnehmen des Gewichtes verbleibt. Bei der Holzfaserplatte mit dem Bindemittel P5 wird eine Durchbiegung von 7 mm ermittelt.

### Prüfung der Bindemittel P7 und P8

153 g Holzfasern (thermomechanisch aufgeschlossene Fichtenholzfasern, mittlere Faserlänge ca. 2 mm, Restfeuchte ca. 11%) werden mit 27 g der Bindemittelpulver gut vermischt. Die Faser-Bindemittelmischung wird zu einer 30x30 cm großen Fasermatte ausgestreut.

Die Fasermatte wird in einer hydraulischen Presse (WKP 600, Fa. Wickert) bei einer Pressentemperatur von 220°C zwischen zwei Metallplatten mit 2 mm dicken Abstandshaltern verpresst. Zunächst wird für 60 s mit einem Pressendruck von 50 gepresst, nach einer 10 s andauernden Druckentlastung wird für weitere 90 s bei einem Pressendruck von 200 bar verpresst.

Die so erhaltenen Faserplatten werden 24 h im Normklima bei 23°C und 65% relativer Luftfeuchte gelagert. Anschließend wird die Dickenquellung nach 24-stündiger Lagerung in Wasser bei 23°C sowie die Biegefestigkeit nach DIN EN 310 bei 23°C gemessen:

| Bindemittel | Dichte [g/cm³] | Dickenquellung [%] | Biegefestigkeit [N/mm²] |
|---|---|---|---|
| Beispiel 1 | 0,86 | 36 | 43 |
| Beispiel 2 | 0,85 | 28 | 49 |

## Patentansprüche

1. Thermisch härtbare polymere Bindemittel in Pulverform, enthaltend
- 87,5 bis 12,5 Gew.-%, bezogen auf das Gesamtgewicht des polymeren Bindemittels, wenigstens eines wasserunlöslichen Polymerisats A1,
- 12,5 bis 87,5 Gew.-%, bezogen auf das Gesamtgewicht des polymeren Bindemittels, wenigstens eines wasserlöslichen Polymerisats A2, das aufgebaut ist aus
- 50 bis 100 Gew.-%, bezogen auf das Polymer A2, mindestens einer ethylenisch ungesättigten Mono- und/oder Dicarbonsäure,
- 0 bis 50 Gew.-%, bezogen auf das Polymer A2, einer ethylenisch ungesättigten Verbindung E, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-%, bezogen auf das Polymer A2, eines oder mehrerer weiterer Monomere,
und
- 0 bis 30 Gew.-%, bezogen auf das Gesamtgewicht des polymeren Bindemittels, wenigstens eines eine Hydroxylgruppe enthaltenden Amins,
wobei das polymere Bindemittel 0,1 bis 30 Gew.-% des wenigstens eine Hydroxylgruppe enthaltenden Amins in Form der Verbindung E und/oder als separate Komponente enthält.

2. Bindemittel nach Anspruch 1, wobei das wenigstens eine Hydroxylgruppe enthaltende Amin ausgewählt ist unter Aminen der allgemeinen Formel I
R^{c}NR^{a}R^{b} (I)
wobei
R^{c} für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder oder 3 nicht benachbarte Doppelbindungen aufweisen kann,
R^{a} für Hydroxy-C₁-C₆-alkyl oder einen Rest der Formel II
-(CH₂CH₂O)ₓ(CH₂CH(CH₃)O)_{y}-H (II)
steht, wobei
in der Formel II die Reihenfolge der Alkylenoxideinheiten beliebig ist und x und y unabhängig voneinander für eine ganze Zahl von 0 bis 100 stehen, wobei die Summe aus x und y > 1 ist,
R^{b} für Wasserstoff, C₁- bis C₂₂-Alkyl, Hydroxy-C₁-C₆-Alkyl, C₆- bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann,
oder R^{b} für einen Rest der Formel III
-(CH₂CH₂O)ᵥ(CH₂CH(CH₃)O)_{w}-H (III)
steht, wobei
in der Formel III die Reihenfolge der Alkylenoxideinheiten beliebig ist und v und w unabhängig voneinander für eine ganze Zahl von 0 bis 100 stehen,
und Mischungen davon.

3. Bindemittel nach einem der Ansprüche 1 oder 2, wobei das Polymerisat A2 als Mono- oder Dicarbonsäure mindestens eine Verbindung enthält, die ausgewählt ist unter Acrylsäure, Methacrylsäure, Crotonsäure, Fumarsäure, Maleinsäure, 2-Methylmaleinsäure und Itaconsäure, bevorzugt (Meth)acrylsäure oder Maleinsäure.

4. Bindemittel nach einem der vorhergehenden Ansprüche, wobei das Polymerisat A2 1 bis 30 Gew.-% der ethylenisch ungesättigten Verbindung E einpolymerisiert enthält.

5. Bindemittel nach einem der vorhergehenden Ansprüche, wobei das Gewichtsverhältnis auf Feststoffbasis von Polymerisat A1 zu Polymerisat A2 im Bereich von 7:1 bis 1:7.

6. Bindemittel nach Anspruch 1, worin das Hydroxylgruppen enthaltende Amin ausgewählt ist unter den Verbindungen der Formel IV 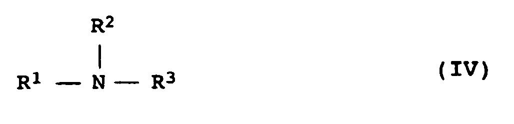 worin R¹ für ein H-Atom, eine C₁-C₅-Alkylgruppe, eine C₂-C₁₀-Hydroxyalkylgruppe oder einen Rest der Formel V
-(CH₂CH₂O)ₓ(CH₂CH(CH₃)O)_{y}-H (V)
steht, worin in Formel V die Reihenfolge der CH₂CH₂O- und CH₂CH(CH₃)O-Einheiten beliebig ist, x und y unabhängig voneinander für eine ganze Zahl von 0 bis 100 stehen, wobei die Summe x+y > 1 ist und R² und R³ unabhängig voneinander für eine C₂-C₁₀-Hydroxyalkylgruppe stehen,
sowie unter Verbindungen, die pro Molekül mindestens zwei Aminogruppen vom Typ (a) und/oder (b) aufweisen 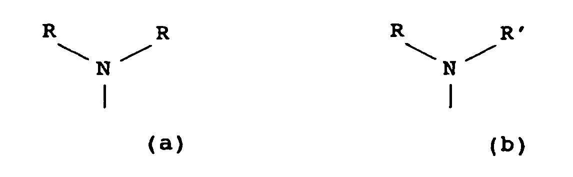 worin R für C₂-C₄-Hydroxyalkyl und R' für C₁-C₅-Alkyl stehen.

7. Bindemittel nach Anspruch 6, wobei die Verbindung der Formel IV Triethanolamin ist.

8. Bindemittel nach Anspruch 6 oder 7, worin das Gewichtsverhältnis von Polymerisat A1 zu Polymerisat A2 im Bereich von 7:1 bis 1:1 liegt.

9. Bindemittel nach einem der vorhergehenden Ansprüche, das au-ßerdem 0,01 bis 2 Gew.-%, bezogen auf das Gesamtgewicht, mindestens eines Reaktionsbeschleunigers enthält.

10. Bindemittel nach Anspruch 9, wobei der Reaktionsbeschleuniger ausgewählt ist unter phosphorhaltigen Verbindungen, bevorzugt hypophosphorige Säure und deren Alkali- und Erdalkalisalze.

11. Bindemittel nach einem der vorhergehenden Ansprüche, wobei das Polymerisat A1 aufgebaut ist aus
- 80 bis 100 Gew.-%, bezogen auf das Gesamtgewicht der Monomere für das Polymerisat A1, mindestens eines ethylenisch ungesättigten Hauptmonomeren und
- bis zu 20 Gew.-%, bezogen auf das Gesamtgewicht der Monomere für das Polymerisat, mindestens eines ethylenisch ungesättigten Comonomeren.

12. Verfahren zur Herstellung thermisch härtbarer polymerer Bindemittel nach einem der Ansprüche 1 bis 11, **dadurch gekennzeichnet, dass** man aus einer wässrigen Zusammensetzung, die bezogen auf das Gesamtgewicht des polymeren Bindemittels
- 87,5 bis 12,5 Gew.-% wenigstens eines wasserunlöslichen Polymerisats A1 in Form einer wässrigen Dispersion,
- 12,5 bis 87,5 Gew.-% wenigstens eines wasserlöslichen Polymerisats A2 und
- 0 bis 30 Gew.-% wenigstens eines eine Hydroxylgruppe enthaltenden Amins
enthält, davon in jedem Fall insgesamt 0,1 bis 30 Gew.-% eines wenigstens eine Hydroxylgruppe enthaltenden Amins als Bestandteil des Polymers A2 und/oder als separate Komponente, durch Verdampfen das Wasser entfernt, wobei man ein Pulver gewinnt.

13. Verfahren nach Anspruch 12, umfassend die folgenden Schritte:
- Herstellen einer thermisch härtbaren, wässrigen Zusammensetzung durch
i) wässrige Emulsionspolymerisation der das Polymerisat A1 bildenden Monomere in Gegenwart wenigstens eines Polymerisats A2, und, sofern enthalten, in Gegenwart des wenigstens eine Hydroxylgruppe enthaltenden Amins und/oder weiterer Komponenten,
ii) gegebenenfalls Zugabe mindestens einer weiteren Komponente zu der in Schritt i) erhaltenen Dispersion, die ausgewählt ist unter Vernetzern, Reaktionsbeschleunigern, weiteren üblichen Zusatzstoffen und Gemischen davon,
- gegebenenfalls Koagulation der Zusammensetzung und
- Entfernen des Wassers unter Bildung eines Pulvers.

14. Verfahren zur Herstellung eines Bindemittels nach einem der Ansprüche 1 bis 11, **dadurch gekennzeichnet, dass** man ein pulverförmiges Polymerisat A1 mit einer wässrigen Lösung des Polymerisats A2 und gegebenenfalls eines Amins, das wenigstens eine Hydroxylgruppe enthält, behandelt und dabei das Wasser durch Verdampfen entfernt.

15. Verfahren nach einem der Ansprüche 12 bis 14, bei dem die Zusammensetzung durch Sprüh- oder Gefriertrocknung getrocknet wird.

16. Verfahren zur Herstellung eines gebundenen Substrats, bei dem ein Substratmaterial mit einem Bindemittel oder einem Redispergat eines Bindemittels nach einem der Ansprüche 1 bis 11 beschichtet oder gemischt und anschließend gehärtet wird.

17. Verfahren nach Anspruch 16, bei dem das Substratmaterial faserig oder körnig ist, bevorzugt Holzschnitzel, Holzfasern, Textilfasern, Glasfasern, Mineralfasern oder Naturfasern, insbesondere Jute, Flachs, Hanf, Sisal, oder Holzschnitzel oder Sand.

18. Gebundenes Substrat, erhältlich nach dem Verfahren nach Anspruch 16 oder 17.

19. Verwendung des thermisch härtbaren polymeren Bindemittels nach einem der Ansprüche 1 bis 11 in Pulverform oder als Redispergat als Bindemittel für Formkörper, bevorzugt für Formkörper aus faserigen oder körnigen Materialien, insbesondere Holzschnitzel, Holzfasern, Textilfasern, Glasfasern, Mineralfasern oder Naturfasern, insbesondere Jute, Flachs, Hanf oder Sisal, Korkschnitzel und Sand.

## Claims

1. A heat-curable polymeric binder in powder form, comprising
- from 87.5 to 12.5% by weight, based on the overall weight of the polymeric binder, of at least one water-insoluble polymer A1,
- from 12.5 to 87.5% by weight, based on the overall weight of the polymeric binder, of at least one water-soluble polymer A2 composed of
- from 50 to 100% by weight, based on the polymer A2, of at least one ethylenically unsaturated mono- and/or dicarboxylic acid,
- from 0 to 50% by weight, based on the polymer A2, of an ethylenically unsaturated compound E selected from the esters of ethylenically unsaturated monocarboxylic acids and the monoesters and diesters of ethylenically unsaturated dicarboxylic acids with an amine containing at least one hydroxyl group,
- up to 20% by weight, based on the polymer A2, of one or more further monomers,
and
- from 0 to 30% by weight, based on the overall weight of the polymeric binder, of at least one amine comprising a hydroxyl group,
said polymeric binder comprising from 0.1 to 30% by weight of said amine comprising at least one hydroxyl group, in the form of the compound E and/or as a separate component.

2. The binder according to claim 1, wherein said amine comprising at least one hydroxyl group is selected from amines of the formula I
R^{c}NR^{a}R^{b} (I)
where
R^{c} is C₆ to C₂₂ alkyl, C₆ to C₂₂ alkenyl, aryl-C₆-C₂₂ alkyl or aryl-C₆-C₂₂ alkenyl, it being possible for the alkenyl radical to have 1, 2 or 3 nonadjacent double bonds,
R^{a} is hydroxy-C₁-C₆ alkyl or a radical of the formula II
-(CH₂CH₂O)ₓ(CH₂CH(CH₃)O)_{y}-H (II)
where
in the formula II the sequence of the alkylene oxide units is arbitrary and x and y independently of one another are integers from 0 to 100, the sum of x and y being > 1,
R^{b} is hydrogen, C₁ to C₂₂ alkyl, hydroxy-C₁-C₆ alkyl, C₆ to C₂₂ alkenyl, aryl-C₆-C₂₂ alkyl, aryl-C₆-C₂₂ alkenyl or C₅ to C₈ cycloalkyl, it being possible for the alkenyl radical to have 1, 2 or 3 nonadjacent double bonds, or R^{b} is a radical of the formula III
-(CH₂CH₂O)ᵥ(CH₂CH(CH₃)O)_{w}-H (III)
where
in the formula III the sequence of the alkylene oxide units is arbitrary and v and w independently of one another are integers from 0 to 100,
and mixtures thereof.

3. The binder according to either of claims 1 and 2, wherein the polymer A2 comprises as mono- or dicarboxylic acid at least one compound selected from acrylic acid, methacrylic acid, crotonic acid, fumaric acid, maleic acid, 2-methylmaleic acid and itaconic acid, preferably (meth)acrylic acid or maleic acid.

4. The binder according to any of the preceding claims, wherein the polymer A2 comprises in copolymerized form from 1 to 30% by weight of the ethylenically unsaturated compound E.

5. The binder according to any of the preceding claims, wherein the weight ratio based on solids of polymer A1 to polymer A2 is in the range from 7:1 to 1:7.

6. The binder according to claim 1, wherein the amine comprising hydroxyl groups is selected from the compounds of the formula IV 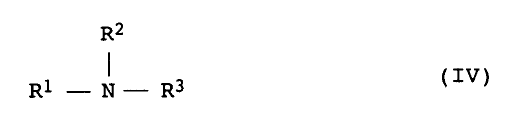 where R¹ is a hydrogen atom, a C₁-C₅ alkyl group, a C₂-C₁₀ hydroxyalkyl group, or a radical of the formula V
-(CH₂CH₂O)ₓ(CH₂CH(CH₃)O)_{y}-H (V)
where in the formula V the sequence of the CH₂CH₂O- and CH₂CH(CH₃)O- units is arbitrary and x and y independently of one another are integers from 0 to 100, the sum x + y being > 1, and R² and R³ independently of one another are a C₂-C₁₀ hydroxyalkyl group,
and from compounds containing per molecule at least two amino groups of type (a) and/or (b) 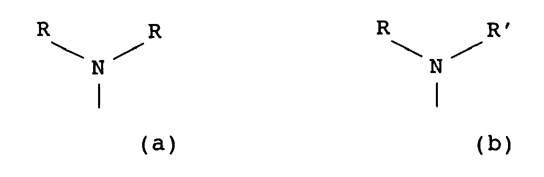 where R is C₂-C₄ hydroxyalkyl and R' is C₁-C₅ alkyl.

7. The binder according to claim 6, wherein the compound of the formula IV is triethanolamine.

8. The binder according to claim 6 or 7, wherein the weight ratio of polymer A1 to polymer A2 is in the range from 7:1 to 1:1.

9. The binder according to any of the preceding claims, further comprising from 0.01 to 2% by weight, based on the overall weight, of at least one reaction accelerant.

10. The binder according to claim 9, wherein said reaction accelerant is selected from phosphorus compounds, preferably hypophosphorous acid and its alkali metal and alkaline earth metal salts.

11. The binder according to any of the preceding claims, wherein the polymer A1 is synthesized from
- from 80 to 100% by weight, based on the overall weight of the monomers for the polymer A1, of at least one ethylenically unsaturated principal monomer and
- up to 20% by weight, based on the overall weight of the monomers for the polymer, of at least one ethylenically unsaturated comonomer.

12. A process for preparing a thermally curable polymeric binder according to any of claims 1 to 11, which comprises evaporating the water from an aqueous composition comprising, based on the total weight of the polymeric binder,
- from 87.5 to 12.5% by weight of at least one water-insoluble polymer A1 in the form of an aqueous dispersion,
- from 12.5 to 87.5% by weight of at least one water-soluble polymer A2, and
- from 0 to 30% by weight of at least one amine comprisiing a hydroxyl group,
thereof in every case in total from 0.1 to 30% by weight of an amine comprising at least one hydroxyl group, as a constituent of said polymer A2 and/or as a separate component,to form a powder.

13. The process according to claim 12, comprising the following steps:
- preparing a heat-curable aqueous composition by
i) aqueous emulsion polymerization of the monomers forming the polymer A1 in the presence of at least one polymer A2 and, if comprised, in the presence of the amine comprising at least one hydroxyl group, and/or of further components,
ii) addition, if appropriate, of at least one further component to the dispersion obtained in step i), said component being selected from crosslinkers, reaction accelerants, further customary additives, and mixtures thereof,
- coagulating the composition, if appropriate, and
- removing the water to form a powder.

14. A process for preparing a binder according to any of claims 1 to 11, which comprises treating a powderous polymer A1 with an aqueous solution of the polymer A2 and, if appropriate, an amine comprising at least one hydroxyl group and removing the water by evaporation.

15. The process according to any of claims 12 to 14, wherein the composition is dried by spray or freeze drying.

16. A process for producing a bound substrate, in which a substrate material is coated or mixed with a binder, or with a redispersed form of a binder, according to any of claims 1 to 11, and is then cured.

17. The process according to claim 16, wherein the substrate material is fibrous or particulate, preferably wood chips, wood fibers, textile fibers, glass fibers, mineral fibers or natural fibers, especially jute, flax, hemp, sisal or wood chips or sand.

18. A bound substrate obtainable by the process according to claim 16 or 17.

19. The use of the heat-curable polymeric binder according to any of claims 1 to 11 in powder form or in redispersed form as a binder for moldings, preferably for moldings comprising fibrous or particulate materials, especially wood chips, wood fibers, textile fibers, glass fibers, mineral fibers or natural fibers, especially jute, flax, hemp or sisal, cork chips and sand.

## Revendications

1. Liant polymère thermodurcissable sous forme de poudre, contenant
- 87,5 à 12,5 % en poids, par rapport au poids total du liant polymère, d'au moins un polymère insoluble dans l'eau A1,
- 12,5 à 87,5 % en poids, par rapport au poids total du liant polymère, d'au moins un polymère soluble dans l'eau A2, qui est constitué
- de 50 à 100 % en poids, par rapport au polymère A2, d'au moins un acide monocarboxylique et/ou dicarboxylique éthyléniquement insaturé,
- de 0 à 50 % en poids, par rapport au polymère A2, d'un composé éthyléniquement insaturé E qui est choisi parmi les esters des acides monocarboxyliques éthyléniquement insaturés et les monoesters et diesters d'acides dicarboxyliques éthyléniquement insaturés avec une amine comportant au moins un groupe hydroxyle,
- de jusqu'à 20 % en poids, par rapport au polymère A2, d'un ou plusieurs autres monomères,
et
- 0 à 30 % en poids, par rapport au poids total du liant polymère, d'au moins une amine contenant un groupe hydroxyle,
le liant polymère contenant 0,1 à 30 % en poids de l'amine contenant au moins un groupe hydroxyle sous la forme du composé E et/ou sous la forme d'un composant séparé.

2. Liant suivant la revendication 1, dans lequel l'amine contenant au moins un groupe hydroxyle est choisie parmi des amines de la formule générale I :
R^{c}NR^{a}R^{b} (I)
dans laquelle
R^{c} représente un groupe C₆-C₂₂-alkyle, C₆-C₂₂₋alcényle, aryl-C₆-C₂₂-alkyle ou aryl-C₆-C₂₂₋alcényle, le radical alcényle pouvant présenter 1, 2 ou 3 doubles liaisons non voisines,
R^{a} représente un groupe hydroxy-C₁-C₆-alkyle ou un radical de la formule II :
-(CH₂CH₂O)ₓ(CH₂CH(CH₃)O)_{y}-H (II)
où
la succession des unités d'oxyde d'alkylène est quelconque dans la formule II et x et y représentent indépendamment l'un de l'autre un nombre entier de 0 à 100, la somme de x et y > 1,
R^{b} représente de l'hydrogène ou un groupe C₁-C₂₂₋alkyle, hydroxy-C₁-C₆-alkyle, C₆-C₂₂-alcényle, aryl-C₆-C₂₂-alkyle, aryl-C₆-C₂₂-alcényle ou C₅-C₈-cycloalkyle, le radical alcényle pouvant présenter 1, 2 ou 3 doubles liaisons non voisines,
ou R^{b} représente un radical de la formule III :
-(CH₂CH₂O)ᵥ(CH₂CH(CH₃)O)_{w}-H (III)
où
la succession des unités d'oxyde d'alkylène est quelconque dans la formule III et v et w représentent indépendamment l'un de l'autre un nombre entier de 0 à 100,
et des mélanges de ces substances.

3. Liant suivant l'une des revendications 1 ou 2, dans lequel le polymère A2 contient, comme acide monocarboxylique ou dicarboxylique, au moins un composé qui est choisi parmi de l'acide acrylique, de l'acide méthacrylique, de l'acide crotonique, de l'acide fumarique, de l'acide maléique, de l'acide 2-méthyl-maléique et de l'acide itaconique, de préférence de l'acide (méth)acrylique ou de l'acide maléique.

4. Liant suivant l'une des revendications précédentes, dans lequel le polymère A2 contient à l'état copolymérisé 1 à 30 % en poids du composé E éthyléniquement insaturé.

5. Liant suivant l'une des revendications précédentes, dans lequel le rapport pondéral, sur base de la matière solide, entre le polymère A1 et le polymère A2 est de l'ordre de 7/1 à 1/7.

6. Liant suivant la revendication 1, dans lequel l'amine contenant des groupes hydroxyle est choisie parmi les composés de la formule IV : 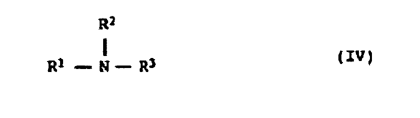 dans laquelle R¹ représente un atome de H, un groupe C₁-C₅-alkyle, un groupe C₂-C₁₀-hydroxyalkyle ou un radical de la formule V :
-(CH₂CH₂O)ₓ(CH₂CH(CH₃)O)_{y}-H (V)
dans laquelle la succession des unités CH₂CH₂O- et CH₂CH(CH₃)O- est quelconque dans la formule V, x et y représentent indépendamment l'un de l'autre un nombre entier de 0 à 100, la somme de x+y > 1, et R² et R³ représentent indépendamment l'un de l'autre un groupe C₂-C₁₀-hydroxyalkyle,
ainsi que parmi des composés qui, par molécule, présentent au moins deux groupes amino du type (a) et/ou (b) : 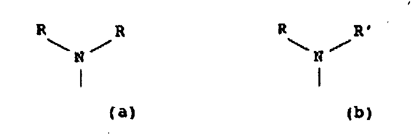 dans lesquels R représente un groupe C₂-C₄₋hydroxyalkyle et R' un groupe C₁-C₅-alkyle.

7. Liant suivant la revendication 6, dans lequel le composé de la formule IV est de la triéthanolamine.

8. Liant suivant la revendication 6 ou 7, dans lequel le rapport pondéral entre le polymère A1 et le polymère A2 est de l'ordre de 7/1 à 1/1.

9. Liant suivant l'une des revendications précédentes, qui contient en outre 0,01 à 2 % en poids, par rapport au poids total, d'au moins un accélérateur de réaction.

10. Liant suivant la revendication 9, dans lequel l'accélérateur de réaction est choisi parmi des composés phosphorés, de préférence de l'acide hypophosphoreux et ses sels de métal alcalin et alcalino-terreux.

11. Liant suivant l'une des revendications précédentes, dans lequel le polymère A1 est constitué
- de 80 à 100 % en poids, par rapport au poids total des monomères du polymère A1, d'au moins un monomère principal éthyléniquement insaturé, et
- de jusqu'à 20 % en poids, par rapport au poids total des monomères du polymère, d'au moins un comonomère éthyléniquement insaturé.

12. Procédé de préparation de liant polymère thermodurcissable suivant l'une des revendications 1 à 11, **caractérisé en ce que**, à partir d'une composition aqueuse qui contient, par rapport au poids total du liant polymère,
- 87,5 à 12,5 % en poids d'au moins un polymère insoluble dans l'eau A1 sous la forme d'une dispersion aqueuse,
- 12,5 à 87,5 % en poids d'au moins un polymère soluble dans l'eau A2, et
- 0 à 30 % en poids d'au moins une amine contenant un groupe hydroxyle,
dont en tout cas au total 0,1 à 30 % en poids d'une amine contenant au moins un groupe hydroxyle sous la forme d'un composant du polymère A2 et/ou sous la forme d'un composant séparé, on élimine l'eau par évaporation, en produisant une poudre.

13. Procédé suivant la revendication 12, comportant les étapes suivantes :
- une préparation d'une composition aqueuse thermodurcissable,
i) par polymérisation en émulsion aqueuse des monomères formant le polymère A1 en présence d'au moins un polymère A2 et, dans la mesure où elle est contenue, en présence de l'amine contenant au moins un groupe hydroxyle et/ou d'autres composants,
ii) éventuellement par addition d'au moins un autre composant à la dispersion obtenue dans l'étape i) qui est choisi parmi des agents de réticulation, des accélérateurs de réaction, d'autres additifs courants et leurs mélanges,
- éventuellement une coagulation de la composition, et
- une élimination de l'eau avec formation d'une poudre.

14. Procédé de préparation d'un liant suivant l'une des revendications 1 à 11, **caractérisé en ce qu'**on traite un polymère pulvérulent A1 avec une solution aqueuse du polymère A2 et éventuellement une amine qui contient au moins un groupe hydroxyle, et on élimine l'eau par évaporation.

15. Procédé suivant l'une des revendications 12 à 14, dans lequel la composition est séchée par un séchage par pulvérisation ou lyophilisation.

16. Procédé de préparation d'un substrat lié, dans lequel une matière de substrat est enduite d'un liant ou d'un produit de redispersion d'un liant suivant l'une des revendications 1 à 10 ou est mélangée avec lui et ensuite durcie.

17. Procédé suivant la revendication 16, dans lequel la matière de substrat est fibreuse ou granuleuse, de préférence des copeaux de bois, des fibres de bois, des fibres textiles, des fibres de verre, des fibres minérales ou des fibres naturelles, en particulier du jute, du lin, du chanvre, du sisal ou des copeaux de bois ou du sable.

18. Substrat lié, obtenu selon le procédé suivant la revendication 16 ou 17.

19. Utilisation du liant polymère thermodurcissable suivant l'une des revendications 1 à 11, sous la forme d'une poudre ou d'un produit de redispersion, comme liant pour des corps façonnés, avantageusement pour des corps façonnés à base de matières fibreuses ou granuleuses, en particulier de copeaux de bois, de fibres de bois, de fibres textiles, de fibres de verre, de fibres minérales ou de fibres naturelles, en particulier de jute, de lin, de chanvre ou de sisal, de copeaux de liège et de sable.
